(19) **Europäisches Patentamt / European Patent Office / Office européen des brevets**

(11) **EP 3 774 027 B1**

(12) # EUROPEAN PATENT SPECIFICATION

(45) Date of publication and mention
of the grant of the patent:
**24.04.2024  Bulletin 2024/17**

(21) Application number: **19781678.8**

(22) Date of filing: **02.04.2019**

(51) International Patent Classification (IPC):
**B01J 21/00** (2006.01)    **B01J 21/18** (2006.01)
**B01J 23/40** (2006.01)    **B01J 23/28** (2006.01)
**B01J 23/745** (2006.01)    **B01J 23/75** (2006.01)
**B01J 23/755** (2006.01)    **B01J 23/835** (2006.01)
**B01J 23/881** (2006.01)    **B01J 37/025** (2006.01)
**C07C 1/04** (2006.01)    **H01M 4/80** (2006.01)
**H01M 4/90** (2006.01)    **C04B 35/26** (2006.01)

(52) Cooperative Patent Classification (CPC):
(C-Sets available)
**B01J 21/18; B01J 21/063; B01J 23/14;**
**B01J 23/42; B01J 23/462; B01J 23/626;**
**B01J 23/745; B01J 23/755; B01J 23/835;**
**B01J 23/8876; B01J 23/8906; B01J 27/19;**
**B01J 35/23; B01J 35/56; B22F 1/17;**    (Cont.)

(86) International application number:
**PCT/IL2019/050384**

(87) International publication number:
**WO 2019/193594 (10.10.2019 Gazette 2019/41)**

(54) **ELECTROCATALYSTS, THE PREPARATION THEREOF, AND USING THE SAME FOR AMMONIA SYNTHESIS**

ELEKTROKATALYSATOREN, IHRE HERSTELLUNG UND VERWENDUNG FÜR DIE AMMONIAKSYNTHESE

ÉLECTRO-CATALYSEURS, LEUR PRÉPARATION,ET LEUR UTILISATION POUR LA SYNTHÈSE DE L'AMMONIAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2018   US 201862651310 P**
**17.09.2018   US 201862731992 P**

(43) Date of publication of application:
**17.02.2021   Bulletin 2021/07**

(73) Proprietor: **Ariel Scientific Innovations Ltd.**
**4070000 Ariel (IL)**

(72) Inventors:
• **SCHECHTER, Alex**
  **73180 Givat Koah (IL)**

• **REVANASIDDAPPA, Manjunatha**
  **Davanagere  Karnataka 577002 (IN)**
• **GOLDSHTEIN, Valentina**
  **4934617 Petah Tikva (IL)**
• **KARAJIC, Aleksandar**
  **32000 Cacak (RS)**

(74) Representative: **Boult Wade Tennant LLP**
**Salisbury Square House**
**8 Salisbury Square**
**London EC4Y 8AP (GB)**

(56) References cited:
**WO-A1-2010/009058    WO-A1-2016/172760**
**WO-A2-01/54216    WO-A2-01/54216**
**WO-A2-2006/135396    WO-A2-2011/089522**
**WO-A2-2011/089522    CN-A- 106 111 201**
**US-A1- 2006 134 505    US-A1- 2012 308 467**

**(Cont. next page)**

EP 3 774 027 B1

**US-A1- 2012 308 467    US-B2- 9 005 816**

(52) Cooperative Patent Classification (CPC): (Cont.)
**H01M 4/8657; H01M 4/9016;** B22F 1/05;
B22F 1/054; B22F 1/056; B22F 2999/00;
C22C 1/0458; C22C 1/0466; Y02E 60/50

C-Sets
B22F 2999/00, B22F 1/17, C22C 1/0458;
B22F 2999/00, B22F 1/17, C22C 1/0466

**Description**

CROSS REFERENCE TO RELATED APPLICATIONS

This application claims the benefit of priority to U.S. Provisional Patent Application No. 62/651,310 filed April 2, 2018, entitled "ELECTROCATALYSTS, THE PREPARATION THEREOF, AND USING THE SAME FOR AMMONIA SYNTHESIS" and U.S. Provisional Patent Application No. 62/731,992 filed September 17, 2018, entitled "ELECTROCHEMICAL AMMONIA GENERATION DIRECTLY FROM NITROGEN AND AIR USING IRON-OXIDE/TITANIA BASED CATALYST AT AMBIENT CONDITIONS".

FIELD OF INVENTION

The present invention, in some embodiments thereof, relates to metal based catalysts and uses thereof for, e.g., ammonia synthesis.

BACKGROUND OF THE INVENTION

The ammonia is extensively produced by using Haber-Bosch process developed in nineteenth century which requires very high pressure and temperature. Industries produce annually more than 200 million tons of ammonia from this method and majority of it used for production of fertilizers. The hydrogen required for this process is generated from steam regeneration, which consumes three to five percent of total natural gas production and releases huge quantity of greenhouse carbon dioxide gas to atmosphere.

Therefore, alternative greener, energy efficient and mild conditional ammonia synthesis is one of the major global challenges. The major bottle neck in ammonia synthesis is dissociation of inert di-nitrogen molecule on catalyst surface and subsequent nitrogen reduction reaction (NRR).

WO 2011/089522 A2 describes catalyst compositions comprising a core-shell structure, the core contains Pt, a Pt alloy, Ru, Re, Pd or Ir, while the shell comprises one or more layers of a precious metal, e.g., Pt or Ir, and alloys thereof that can include one or more other precious metals, e.g. Ru, Re, and Pd, and optionally one or more transition metals, e.g. Mo, Co and Cr. WO 01/54216 A2 discloses nanosized powders of Pt and alloys, coated with catalytically active metals such as Pt, Pd, Ru, Re, Ir, Au, Ag, Co, Fe, Ni, Y, and Mn. US 2006/134505 A1 discloses Pd or Pd alloy nanoparticle catalysts coated with main group transition metals, and bound to carbon black whereby the resulting material is used in a cathode of an electrochemical cell. US 2012/308467 A1 describes catalytic synthesis of ammonia using core-shell iron-iron oxide nanoparticles.

SUMMARY OF THE INVENTION

According to the present invention there is provided a composition comprising a first metal component and a second metal component characterized by a molar ratio of said first metal component to said second metal component is in the range of 1:9 to 9:1, wherein: (i) at least one surface of said second metal component is coated with said first metal component; (ii) first metal component comprises $Fe_2O_3$ or $Fe_3O_4$ or $Fe_2O_3FeO$ and wherein said second metal component comprises $TiO_2$, and (iii) said composition is in the form of particles.

In some embodiments, the particles have a size in the range of 1 nm to 50 $\mu$m.

In some embodiments, the composition further comprises a substrate, wherein the first metal component and the second metal component are deposited on at least one surface of the substrate.

In some embodiments, the substrate is selected from the group consisting of: carbon black, activated carbon, graphite, carbon nanotube, and any combination thereof.

In some embodiments, the carbon black is selected from the group consisting of: carbon nanotube, graphene, Vulcan XC-72, Black Pearls 700, Black Pearls 800, Vulcan XC-605, Regal 350, Regal 250, Black Pearls 570, and Vulcan XC-68.

In some embodiments, the carbon black is Vulcan XC-72.

In some embodiments, the substrate is present at a concentration of 5% to 50%, by total weight of the composition.

In some embodiments, the composition is a catalyst.

In some embodiments, the composition is for use in electrochemical ammonia synthesis.

According to an aspect of some embodiments of the present invention there is provided an electrochemical cell comprising the catalyst of the present invention, wherein the catalyst is a cathode.

In some embodiments, the electrochemical cell further comprises an electrolysis cell container comprising an inlet and an outlet; a distributor, wherein the distributor is in fluid communication with the cathode and the inlet; and an anode, wherein: (i) the anode and cathode are spaced apart from each other inside the container; (ii) the anode is in electrical communication with the cathode; (iii) the largest dimension of the anode and the cathode is defined by transverse cross-section dimensions of the electrolysis cell container; and (iv) the cathode is at least 50 fold thicker than the anode.

In some embodiments, the container is configured to allow a nitrogen gas to enter through the inlet and to contact the distributor.

In some embodiments, the distributor is configured to uniformly distribute the gas over a surface of the cathode.

In some embodiments, the cathode, the anode or both, is at least partially porous.

In some embodiments, the container is configured to allow a nitrogen gas to enter thereto and to contact the cathode.

In some embodiments, the electrochemical cell is configured to electrically connect an electric potential to the anode and to the cathode.

In some embodiments, the electrochemical cell is configured to synthesize ammonia at a rate of $1 \times 10^{-11}$ mol $s^{-1}cm^{-2}$ to $1 \times 10^{-7}$ mol $s^{-1}cm^{-2}$ at 1 atm $N_2$.

In some embodiments, the electrochemical cell is configured to synthesize ammonia at a rate of at least $1 \times 10^{-9}$ mol $cm^{-2}$ $s^{-1}$ on the catalyst at 1 atm $N_2$.

In some embodiments, the electrochemical cell is further configured to synthesize hydrogen.

In some embodiments, the anode is dimensioned to curb production of hydrogen.

In some embodiments, the remaining gas is directed via the outlet into a collecting chamber.

In some embodiments, the collecting chamber is an acid trap.

In some embodiments, the anode comprises comprise nickel, iron, zinc, cobalt, chromium, titanium, or any oxide or a combination thereof.

In some embodiments, the container further comprises an alkaline electrolyte solution.

In some embodiments, the electrolyte solution is saturated with nitrogen.

In some embodiments, the alkaline electrolyte solution is a sodium hydroxide (NaOH) solution, potassium hydroxide (KOH) solution or lithium hydroxide (LiOH) solution.

In some embodiments, the alkali electrolyte solution is present at a concentration of 0.1 to 5 M.

According to an aspect of some embodiments of the present invention there is provided a process of synthesizing ammonia, the process comprising: (i) contacting a nitrogen gas with the cathode of the electrochemical cell of the present invention, and (ii) applying an electric potential to the anode and the cathode, thereby obtaining the ammonia.

In some embodiments, the synthesis is performed at a temperature of from 20 °C to 80 °C.

In some embodiments, the temperature is in the range of from 20 °C to 60 °C.

In some embodiments, the synthesis is characterized by a faradaic efficiency in the range of 1% to 30%.

In some embodiments, the rate of ammonia production is in the range of $1 \times 10^{-11}$ mol $s^{-1}cm^{-2}$ to $1 \times 10^{-7}$ mol $s^{-1}cm^{-2}$.

Further embodiments and the full scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

Figures 1A-1D present graphs showing linear sweep voltammograms (LSVs) of Vulcan XC-72 **(Figure 1A),** Pt/C **(Figure 1B),** Ru/C **(Figure 1C)** and RuPt/C modified electrodes **(Figure 1D)** in argon saturated (curve "1") and nitrogen saturated (curve "2") 1.0M KOH solution. Scan rate: 15 mV/s;

**Figures 2A-2C** present non-limiting schematic illustrations of electrochemical cell used for nitrogen reduction reaction **(Figures 2A and B)**, and a photographic image showing the formation of ammonia in both electrolyte (1.0 M KOH) and acid trap (1 mM $H_2SO_4$) **(Figure 2C);**

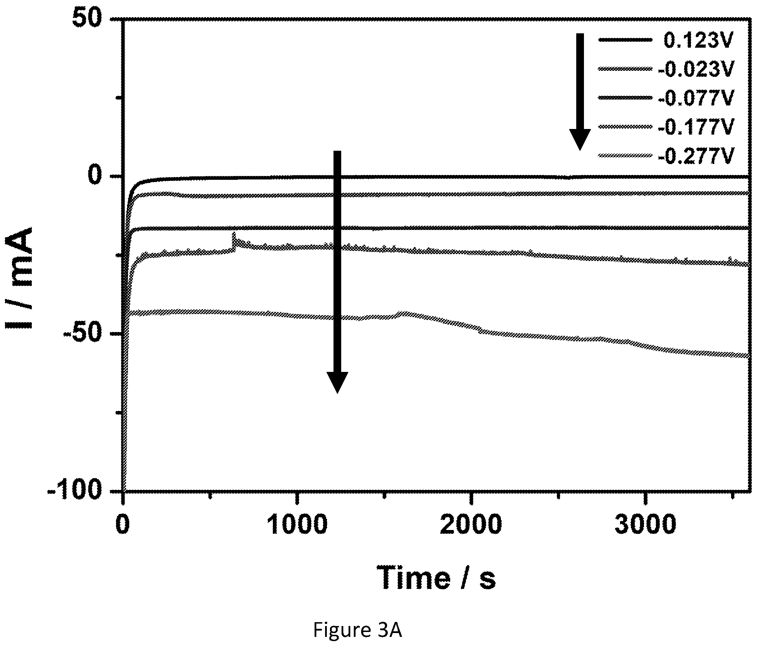

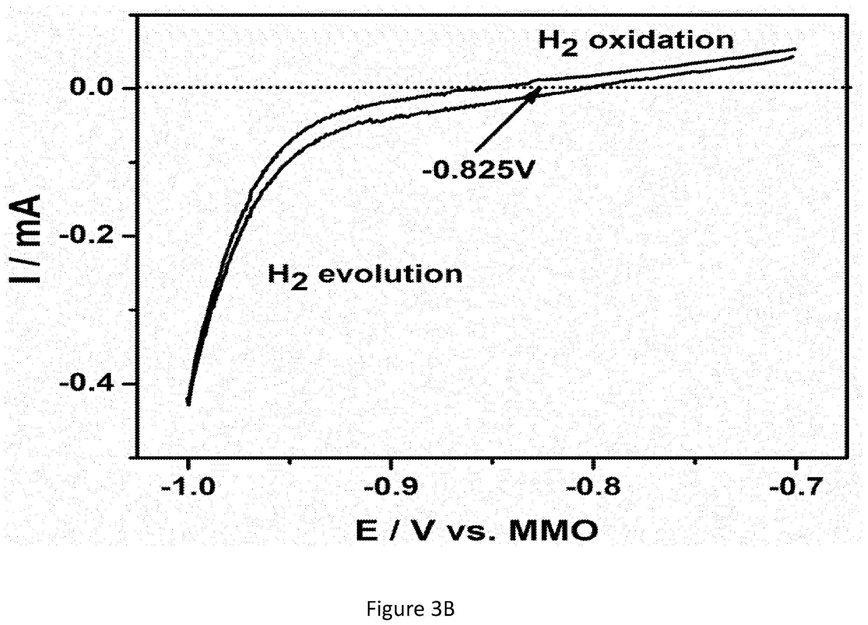

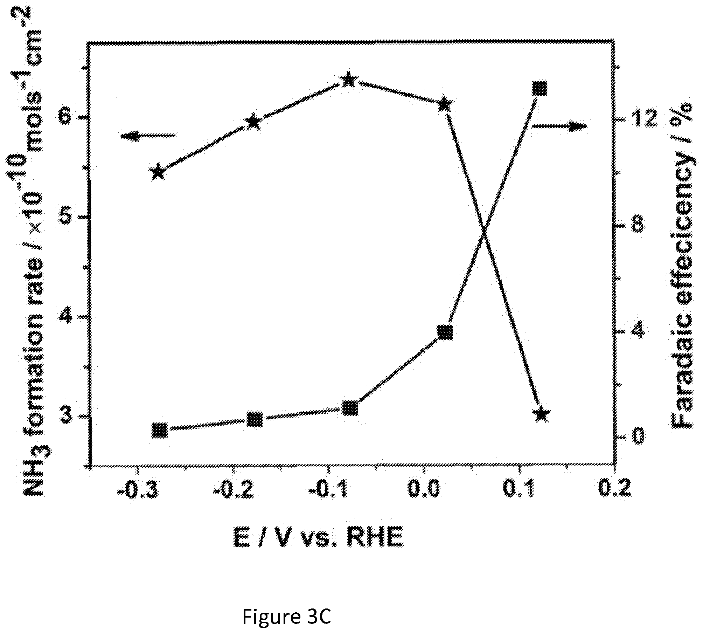

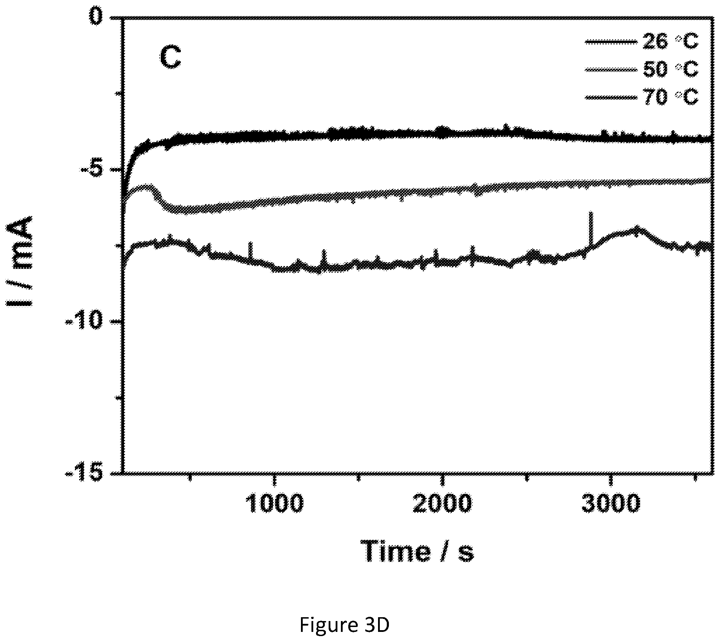

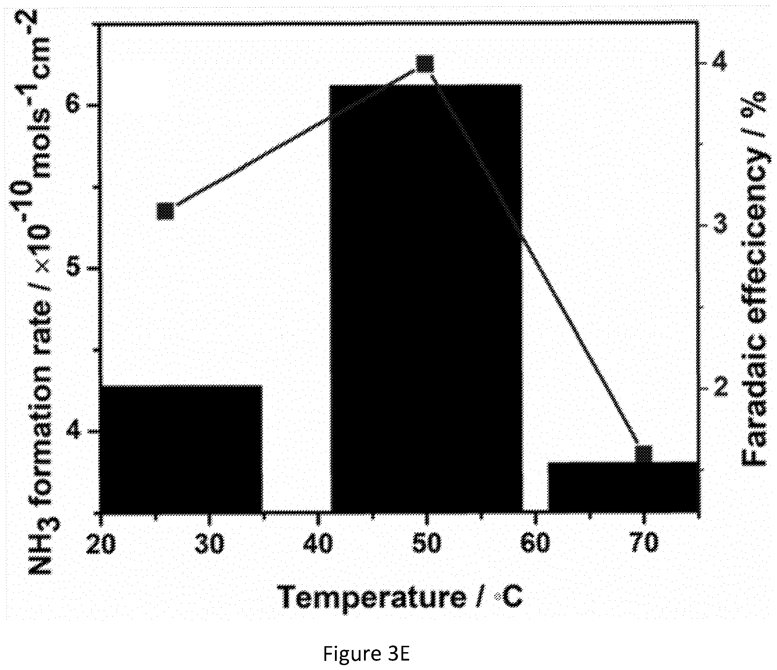

**Figures 3A-3E** present graphs showing chronoamperograms of RuPt/C modified electrodes in 1.0M KOH under nitrogen atmosphere at various applied potentials **(Figure 3A);** the calibration curve of MMO (1.0M KOH) electrode with respect to reversible hydrogen electrode (RHE). (E (RHE) = E (MMO) + 0.825V); MMO: mercury mercuric oxide **(Figure 3B);** correlation between rate of ammonia formation and Faradaic efficiency at different potentials **(Figure 3C);** chronoamperometry of RuPt/C modified electrodes in 1.0M KOH under nitrogen atmosphere at different temperatures **(Figure 3D);** and the rate of ammonia formation and Faradaic efficiency at various temperatures **(Figure 3E);**

**Figures 4A-B** presents mass spectrum of gas stream produced at RuPt/C catalyst in 1.0 M KOH at 50 °C under open circuit potential;

**Figures 5A-5D** present mass spectrograms of hydrazine **(Figure 5A);** ammonia **(Figure 5B)** hydrogen **(Figure 5C)** and chronoamperograms of RuPt/C modified electrode **(Figure 5D)** in 1.0M KOH under nitrogen atmosphere at various applied potentials;

**Figure 6** presents a graph showing the current density of profile of RuPt/C at an applied potential of 0.023V vs. RHE;

**Figures 7A-D** present XRD patterns of $Fe_2O_3$ **(Figure 7A)** and $Fe_2O_3/TiO_2$ composite **(Figure 7B);** SEM images of $Fe_2O_3/TiO_2$ **(Figure 7C),** and EDX images of the composite material **(Figure 7D);**

**Figures 8A-B** present optimization of molar rations of $Fe(NO_3)_3$ and $TiO_2$ (Figure 8A) and EDX spectrum of $\alpha$-$Fe_2O_3/TiO_2/C$ composite;

**Figures 9A-D** present LSVs of nickel foam **(Figure 9A);** $TiO_2/C$ **(Figure 9B);** $Fe_2O_3$ **(Figure 9C)** and $Fe_2O_3/TiO_2$ **(Figure 9D)** coated nickel-foam electrodes in argon-saturated and nitrogen-saturated 1.0 M KOH solution; scan rate: 5mV/s;

**Figures 10A-B** present XRDs of Hematite/$TiO_2$ catalysts before **(Figure 10A)** and after **(Figure 10B)** applied potential (-0.277 V vs. RHE);

**Figures 11A-C** present chronoamperograms of $Fe_2O_3/TiO_2/C$ coated nickel-foam electrodes in 1.0 M KOH under nitrogen atmosphere at various applied potentials **(Figures 11A**, **B**), and correlation between rate of ammonia formation and faradaic efficiency at different potentials **(Figure 11C);**

**Figures 12A-C** present chronoamperograms of $Fe_2O_3/TiO_2/C$ coated nickel-foam electrodes in 1.0 M KOH under nitrogen atmosphere at various temperatures **(Figure 12A),** correlation between rate of ammonia formation and faradaic efficiency at various temperatures **(Figure 12B),** and calculated activation energy of $Fe_2O_3/TiO_2/C$ catalyst for NRR **(Figure 12C);**

**Figures 13A-B** present chronoamperograms of $Fe_2O_3/TiO_2/C$ coated nickel-foam electrodes in nitrogen-saturated and air-saturated 1.0 M KOH solution (Figure 13A), and stability test of $Fe_2O_3/TiO_2/C$ coated nickel-foam electrodes (five consecutive NRR measurements) at an applied potential of -0.377 V (Figure 13B);

**Figures 14A-D** present mass spectra of an ammonia generator and outcoming gas stream at a $Fe_2O_3/TiO_2/C$ catalyst in 1.0 M KOH at room temperature under open-circuit potential (Figure 14A) and an applied potential of -0.477 V (Figure14B), mass spectrograms of hydrogen (Figure14C) and ammonia (Figure 14D) at different potentials;

**Figure 15** presents electrochemical oxidation of ammonia on nickel foil electrode; conditions: scan rate - 5 mV s$^{-1}$, standard TP, 1.0 M KOH, Ni foil - working, MMO (1.0 M KOH) - reference and Ni counter electrode;

**Figures 16A-C** present Calibration curves of the indophenol method (Figure 16A), UV-Vis spectra recorded at $\lambda$=655 nm for different concentrations of ammonia (Figure 16B), and calibration curves of Nessler's method (Figure 16C);

**Figure 17** presents STEM image of RuSn nanoparticles attached to the carbon support;

**Figures 18A-B** present LSV of RuSn/C and Ru/C (dashed line) recorded in a nitreogen saturated 0.1M $Na_2SO_4$ at a scan rate of 5 mV s$^{-1}$ (Figure 18A) and ammonia formation rate and Faradaic efficiency expressed as a function of an applied potential (Figure 18B);

**Figures 19A-B** present LSV of RuSn/C and Ru/C (dashed line) recorded in a nitrogen saturated 0.1M $Na_2SO_4$ at a scan rate of 5 mV s-1, electrode area of 2 cm$^2$ (Figure 19A), and ammonia formation rate and Faradaic efficiency expressed as a function of an applied potential (Figure 19B);

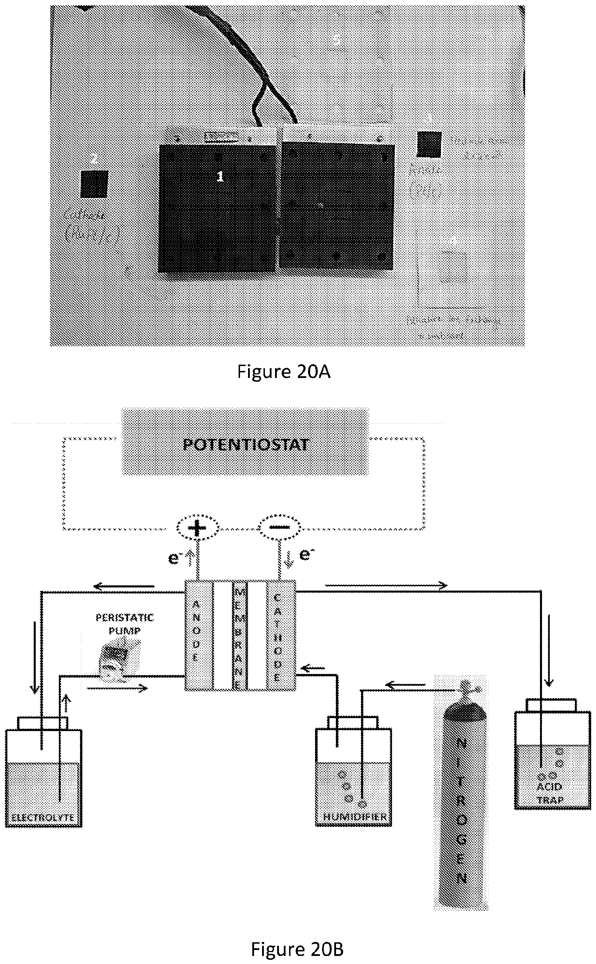

**Figures 20A-B** present the elements of Fuel Cell (Figure 20A): two carbon plates with channels for gases (1), cathode (2), anode (3), membrane (4) and Gasket (5); and a schematic representation of working condition of fuel cell (Figure 20B);

**Figures 21A-B** present a linear sweep voltammograms of nickel foil anode-alkaline membrane- $Fe_2O_3/TiO_2$ composite -cathode cell configuration under nitrogen gas atmosphere (Figure 21A) and nitrogen gas flow rate: 20 ml/min (Figure 21B); chronoamperograms of above cell configuration at 0.4 V;

**Figure 22** presents image of Bottle cell: 1 - working electrode (cathode); 2 - vessel; 3 - N2 introducing; 4 - anode tube with electrode; 5 - rubber cork;

**Figure 23** presents schematic represnataion of two electrode Electrochemical cell without membrane *(Prototype 3)*;
**Figure 24** presents ammonia formation rate over time at RT and 50 °C using Prototype 3;
**Figure 25** presents the Effect of KOH concentration on the rate of electrochemical ammonia formation (Prototype 3); and
**Figure 26** presents the stability of $Fe_2TiO_3/TiO_2/C$ electrode.

DETAILED DESCRIPTION OF THE INVENTION

The present invention, in some embodiments thereof, relates to catalysts comprising a first metal component and a second metal component, and uses thereof for nitrogen reduction, e.g., for the electrochemical synthesis of ammonia at ambient temperature and pressure, by using water and pure nitrogen gas or air.

According to some embodiments, the present invention relates to a composition comprising one or more metal elements. In some embodiments, the present invention relates to a composition comprising a bimetallic catalyst. In some embodiments, the composition comprises two or more catalytically active components. In some embodiments, the catalytically active components induce a synergistic effect on each other.

In some embodiments, the composition has high electrocatalytic activity towards nitrogen reduction. In some embodiments, the electrocatalytic nitrogen reduction is carried out at ambient pressure and temperature in aqueous media by using either air or pure nitrogen as nitrogen sources.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

*The composition*

According to the present invention there is provided a composition comprising a first metal component and a second metal component characterized by a molar ratio of said first metal component to said second metal component is in the range of 1:9 to 9:1, wherein: (i) at least one surface of said second metal component is coated with said first metal component; (ii) first metal component comprises Fe2O3 or Fe3O4 or Fe2O3FeO and wherein said second metal component comprises TiO2, and (iii) said composition is in the form of particles.

In embodiments falling outside the scope of the invention, the composition comprises a first metal component comprising one or more metals alloying with a second metal component comprising one or more metals.

In some embodiments, the molar ratio of the first metal component to the second metal component are in the range of 1:9 to 9:1, 2:9 to 9:1, 3:9 to 9:1, 4:9 to 9:1, 5:9 to 9:1, 6:9 to 9:1, 7:9 to 9:1, 8:9 to 9:1, 9:9 to 9:1, 1:9 to 9:2, 1:9 to 9:3, 1:9 to 9:4, 1:9 to 9:5, 1:9 to 9:6, 1:9 to 9:7, 1:9 to 9:8, or 1:9 to 9:9, including any range therebetween.

In some embodiments, the particles have a size in the range of 1 nm to 50 $\mu$m, 3 nm to 50 $\mu$m, 5 nm to 50 $\mu$m, 10 nm to 50 $\mu$m, 25 nm to 50 $\mu$m, 50 nm to 50 $\mu$m, 100 nm to 50 $\mu$m, 250 nm to 50 $\mu$m, 500 nm to 50 $\mu$m, 1 nm to 900 nm, 1 nm to 800 nm, 1 nm to 500 nm, 1 nm to 250 nm, or 1 nm to 100 nm, including any range therebetween.

In embodiments falling outside the scope of the invention, the first metal component and/or second metal component comprise two metals.

In embodiments falling outside the scope of the invention, the first metal component comprises Ru, Pt, Pd, Sn, Co, Mo, and any combination thereof.

In embodiments falling outside the scope of the invention, the second metal component comprises Sn, Ru, Fe, Pt, Pb, Bi, Hg, Cd, and any combination thereof.

According to the invention, the first metal component comprises the active metal. According to the invention, the second metal component comprises a co-catalyst. [0086] Non-limiting examples of other co-catalysts not according to the present invention include Sn, Pb, Bi, Hg, Cd, and their corresponding oxides, sulfides, selenides, nitrides, and phosphides.

In some embodiments, a composition as described herein is for use in electrochemical ammonia synthesis.

In some embodiments, the second metal component improves the activity of the first metal component. In some embodiments, a composition comprising a second metal component (also referred to as "co-catalyst"), has a higher ammonia production, when compared to the corresponding composition without the second metal component.

In some embodiments, ammonia production using a composition according to the present invention comprising a second metal component is at least 1 fold, at least 2 fold, at least 5 fold, at least 10 fold, at least 12 fold, at least 50 fold, or at least 100 fold, higher then when using the corresponding composition without the second metal component. In some embodiments, second metal component is not consumed in the process.

In some embodiments, the second metal component prevents hydrogen evolution during electrochemical ammonia synthesis. In some embodiments, the second metal component prevents the formation of hydrogen next to the first metal component.

According to the present invention, there is provided a composition comprising $Fe_2O_3$, $Fe_3O_4$ or $Fe_2O_3FeO$ and $TiO_2$. The composition comprises $Fe_2O_3$, $Fe_3O_4$ or $Fe_2O_3FeO$ as the first metal component and $TiO_2$ as the second metal component, in a molar ratio in the range of 1:9 to 9:1.

In embodiments falling outside the scope of the invention, the first metal component is Fe and the second metal component is Sn, in a molar ratio in the range of 1:9 to 9:1.

In embodiments falling outside the scope of the invention, the first metal component is Ru or Fe and the second metal component is Pt or Pd or Sn, in a molar ratio in the range of 1:9 to 9:1.

In embodiments falling outside the scope of the invention, the first metal component is Pt and the second metal component is Ru in a molar ratio in the range of 1:9 to 9:1.

Further embodiments described herein falling outside the scope of the present invention relate to palladium-tin based catalysts.

In embodiments falling outside the scope of the invention, there is provided a composition comprising Ruthenium (Ru) and Platinum (Pt), wherein the molar ratio of the Ru to the Pt is in the range of 1:10 to 10:1, respectively.

In embodiments falling outside the scope of the invention, the Ru:Pt molar ratio is in the range of 1:10 to 9:1, respectively. In some unclaimed embodiments, the Ru:Pt molar ratio is in the range of 1:9 to 9:1, respectively. In some unclaimed embodiments, the Ru:Pt molar ratio is in the range of 1:8 to 8:1, respectively. In some unclaimed embodiments, the Ru:Pt molar ratio is in the range of 1:7 to 7:1, respectively. In some unclaimed embodiments, the Ru:Pt molar ratio is in the range of 1:6 to 6:1, respectively. In some unclaimed embodiments, the Ru:Pt molar ratio is in the range of 1:5 to 5:1, respectively. In some unclaimed embodiments, the Ru:Pt molar ratio is in the range of 1:4 to 4:1, respectively. In some unclaimed embodiments, the Ru:Pt molar ratio is in the range of 1:3 to 3:1, respectively. In some unclaimed embodiments, the Ru:Pt molar ratio is in the range of 1:2 to 2:1, respectively. In some unclaimed embodiments, the Ru:Pt molar ratio is 1:1, respectively.

In some unclaimed embodiments, the Ru:Pt molar ratio is 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, or 1:10, respectively, including any value and range therebetween.

In exemplary unclaimed embodiments, the molar ratio of the Ru to the Pt is about 1:1 ($\pm 20\%$).

In some embodiments, the composition is in the form of a core-shell structure in which the core particle comprises metal particles covered with the outer layer comprising a metal or an alloy thereof. In some embodiments, the composition is in the form of a core-shell structure in which the core particle comprises a first metal component particles covered with the outer layer comprising a second metal component as described herein.

In some unclaimed embodiments, the composition is in the form of a core-shell structure in which the core particle comprises metal particles covered with the outer layer comprising a metal or an alloy thereof.

In some embodiments, the term "shell", refers to the coating domain surrounding the core.

By "coated by a shell" it is meant to refer to a composition of two or more entities, namely an entity that defines an enclosure (the enclosing entity, i.e. the shell) and the entity (or entities) that is being at least partially enclosed therein. In some embodiments, the coating may be conformal with the exact contour of the core. In some embodiments, the core comprises or is made of a plurality of particles.

Particle(s) coated by a shell may be characterized by a discrete inner and outer surface wherein the inner surface constitutes the boundary of the enclosed area or space. The enclosed area or space may be secluded from the exterior area of space which is bounded only by the outer surface.

In the context of the present invention, the closure of the enclosing entity may depend of the size, shape and chemical composition of the entity that is being enclosed therein, such that the enclosing entity may be "closed" for one entity and at the same time be "open" for another entity. For example, structures presented herein are closed with respect to certain chemical entities which cannot pass through their enclosing shell, while the same "closed" structures are not closed with respect to other entities.

As used herein, the term "alloy", refers to a monophasic or polyphasic metallic material of a binary or polynary system. The starting components (alloy elements) may enter into metallurgical interactions with one another and thereby lead to the formation of new phases (e.g., mixed crystals, intermetallic compounds, superlattice).

In some embodiments, the alloy can include deposition of two or more target materials, so as to form a di-segmented nanostructure (e.g., if two or more target metals are deposited sequentially), a tri-segmented nanostructure (e.g., if three or more target metals are deposited sequentially), etc. At least one of the deposited metals may be etched at later stages of the process. The process can include deposition of one or more such materials.

Herein throughout, the expression "deposited on at least one surface" is also referred to herein, for simplicity, as a coating on substrate, or surface of a substrate.

In some embodiments, the term "coating", or any grammatical derivative thereof, is defined as a coating that (i) is positioned above the substrate, (ii) is not necessarily in contact with the substrate, that is to say one or more intermediate coatings may be arranged between the substrate and the coating in question (however, it may be in contact with the substrate), and (iii) does not necessarily completely cover the substrate.

*Substrate*

In some embodiments, the composition further comprises a substrate. In some embodiments, a first metal component and a second metal component are deposited on at least one surface of the substrate.

In some embodiments, the substrate comprises carbon.

In some embodiments, the substrate comprises a co-catalyst. In some embodiments, a co-catalyst is a substrate to the active material and helps hindering the competing hydrogen reduction reaction.

Substrate usable according to some embodiments of the present invention can have, for example, organic or inorganic surfaces.

In some embodiments, the substrate is selected from, but is not limited to, carbon, a metal oxide, a polymer, or any combination thereof.

Non-limiting exemplary substrates are selected from activated carbon, graphite, carbon nanotube, metal mesh or foam, Ni foam, Sn foam, or woven, ceramic materials, Toray paper, carbon cloth, carbon paper, or any combination thereof.

Non-limiting exemplary carbon is selected from carbon black, activated carbon, graphite, carbon nanotube, and any combination thereof.

The carbon black may be selected from, without being limited thereto, carbon nanotube, graphene, Vulcan XC-72, Black Pearls 700, Black Pearls 800, Vulcan XC-605, Regal 350, Regal 250, Black Pearls 570, and Vulcan XC-68, or any combination thereof.

In exemplary embodiments, the carbon comprises Vulcan XC-72.

In some embodiments, the composition described herein is identified for use as a catalyst or as an electro-catalyst. In some embodiments, the catalyst is a cathode.

In some embodiments, the substrate is present at a concentration of 2% to 50%, by total weight of the composition. In some embodiments, the substrate is present at a concentration of 2% to 30%, by total weight of the composition. In some embodiments, the substrate is present at a concentration of 3% to 25%, by total weight of the composition. In some embodiments, the substrate is present at a concentration of 4% to 20%, by total weight of the composition. In some embodiments, the substrate is present at a concentration of 5% to 15%, by total weight of the composition. In some embodiments, the substrate is present at a concentration of 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30%, by total weight of the composition, including any value and range therebetween. In some embodiments, the substrate is present at a concentration of about 10%, by total weight of the composition.

*The apparatus*

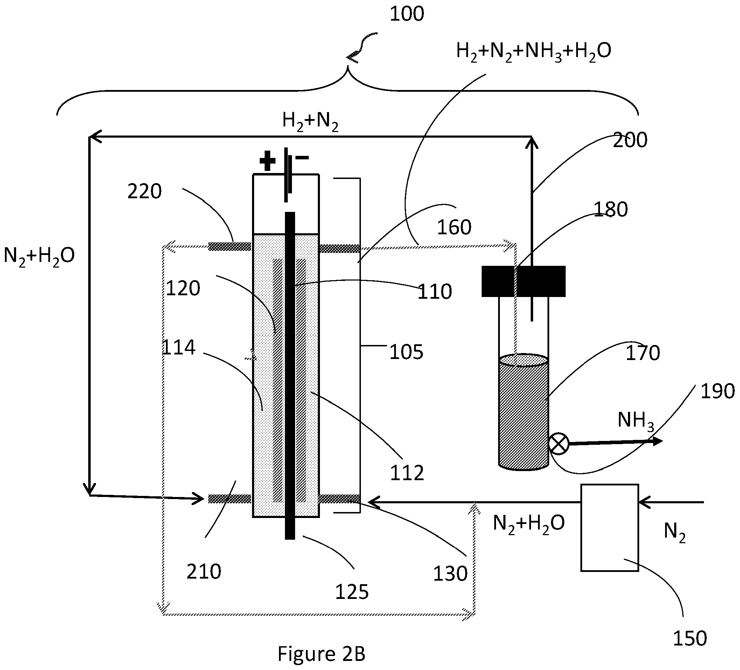

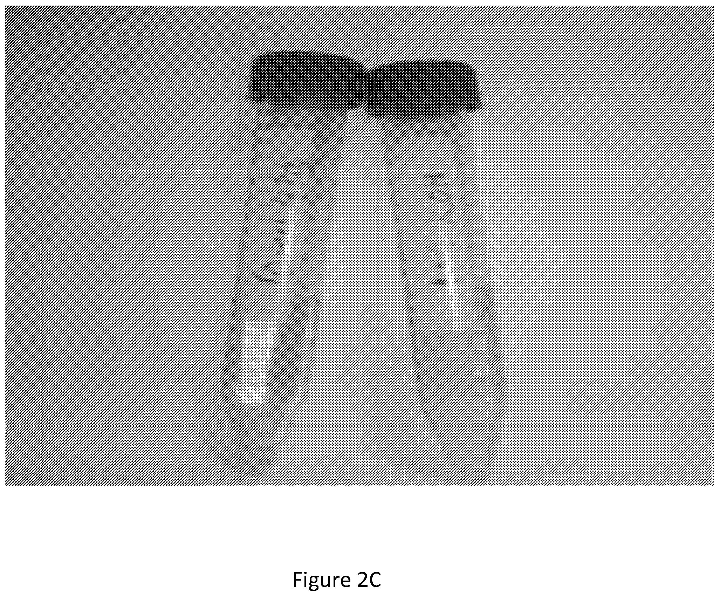

**Figure 2B** presents a schematic illustration of an apparatus containing electrochemical cell used for nitrogen reduction reaction.

The apparatus **100** may be used for synthesizing ammonia by using an alkali electrolyte. The apparatus **100** may be used for synthesizing hydrogen. Apparatus **100** may have a chamber or a container **105** configured to contain the alkali electrolyte. Apparatus **100** may have a working electrode (e.g., a cathode) **110** and an anode **120**. Working electrode **110** and anode **120** may be disposed separately from each other in chamber **105**.

In some embodiments, ammonia may be synthesized at an interface of cathode **110**.

Apparatus **100** may have an electrode separation membrane **125**. Electrode separation membrane **125** may be disposed in chamber **105**. Electrode separation membrane **125** may be disposed in chamber **105** between cathode **110** and anode **120** and may electrically separate cathode **110** and anode **120**, e.g., by dividing chamber **105** to do define a cathode zone **112** and an anode zone **114**. Non-limiting exemplary working electrodes **110** (e.g., cathode) are described herein throughout. Non-limiting exemplary anodes **120** comprise nickel (Ni), iron, zinc, cobalt, chromium, titanium, or any oxide or a combination thereof.

Chamber **105** may have a nitrogen inlet **130** (also referred to as "first nitrogen inlet"). Inlet **130** may be located at a lower part of the chamber **105** e.g., in cathode zone **112**. Nitrogen inlet **130** may include a pipe of various shapes and sizes, connected to, attached to, or integrally formed with chamber **105**. Nitrogen inlet **130** may allow gas (e.g., nitrogen) to enter chamber **105**. Optionally, the gas (nitrogen) may be humidified with water vapor.

Apparatus **100** may be connected to a nitrogen supply unit **150** allowing to supply nitrogen via nitrogen inlet **130**. Nitrogen gas may enter nitrogen supply unit **150,** and, optionally, the nitrogen may be humidified in nitrogen supply unit **150.**

Apparatus **100** may have an ammonia outlet **160**. Ammonia outlet **160** may be located in chamber **105,** e.g., in cathode zone **112**. Ammonia outlet **160** may allow ammonia exit chamber **105**. Ammonia outlet **160** may further allow hydrogen gas generated to exit chamber **105**. Ammonia outlet **160** may further allow other gasses involved in the ammonia synthesis, e.g., nitrogen or water, to exit chamber **105**.

Apparatus **100** may have an ammonia trap **170.** Ammonia trap **170** may be in the form of a container configure to contain an acid (e.g., sulfonic acid). Ammonia trap **170** may have an inlet **180,** allowing a gas (e.g., ammonia and other gasses) exiting ammonia outlet **160** to enter ammonia trap **170.** Ammonia trap **170** may have a first outlet **190** allowing ammonia exit therefrom. First outlet **190** may be located at a lower part of ammonia trap **170.** First outlet **190** may include a valve allowing to control the rate of ammonia flow exiting outlet **190.** Ammonia trap **170** may have a second outlet **200** allowing gasses (e.g., nitrogen and hydrogen) to exit therefrom. Outlet **190** may be located at an upper part of ammonia trap **170.**

Chamber **105** may have another nitrogen inlet **210** (also referred to as "second nitrogen inlet"). Inlet **210** may be located at a lower part of the chamber **105** e.g., in anode zone **114.** Nitrogen inlet **210** may include a pipe of various shapes and sizes, connected to, attached to, or integrally formed with chamber **105.** Nitrogen inlet **130** may further allow gasses (e.g., nitrogen) exiting second outlet **200** to reenter, or recirculate to, chamber **105.**

Apparatus **100** may have a gas outlet **220.** Gas outlet **220** may be located in chamber **105,** e.g., in anode zone **114.** Gas outlet **220** may allow gasses (e.g., gasses involved in the ammonia synthesis, such as nitrogen or water) exit chamber **105.** Gas outlet **220** may include a pipe of various shapes and sizes, connected to, attached to, or integrally formed with chamber **105.** Optionally, gasses exiting chamber **105** via gas outlet **220,** may be allowed to reenter, or recirculate, to chamber **105** via nitrogen inlet **130.**

In some embodiments apparatus **100** is configured to synthesize ammonia at a rate (in mol cm$^{-2}$ s$^{-1}$) of $1 \times 10^{-8}$, at least $5 \times 10^{-8}$, at least $1 \times 10^{-9}$, $2 \times 10^{-9}$, at least $3 \times 10^{-9}$, $4 \times 10^{-9}$, at least $5 \times 10^{-9}$, including any value and range therebetween, e.g., at 1 atm N$_2$.

In some embodiments apparatus **100** is configured to synthesize ammonia at a rate (in mol cm$^{-2}$ s$^{-1}$) of $1 \times 10^{-8}$, at least $5 \times 10^{-8}$, at least $1 \times 10^{-9}$, $2 \times 10^{-9}$, at least $3 \times 10^{-9}$, $4 \times 10^{-9}$, at least $5 \times 10^{-9}$, including any value and range therebetween, e.g., at 1 atm N$_2$.

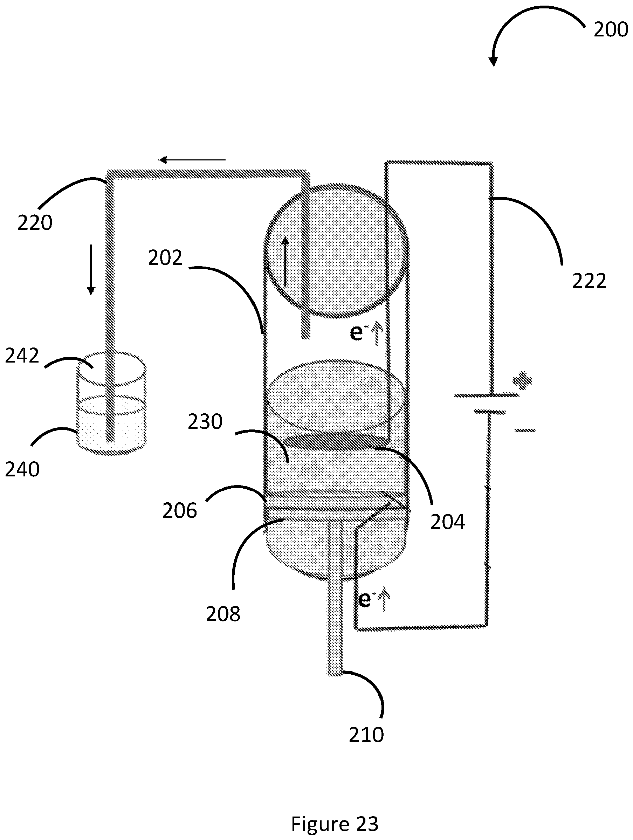

Reference is now made to Figure 23, which is a plan view simplified illustration of an exemplary apparatus containing an electrochemical cell used for nitrogen reduction reaction, according to some embodiments of the present invention. In some embodiments, the apparatus **200** comprises an electrolysis cell container **202** comprising an inlet **210** and an outlet **220,** a cathode 206, a distributor **208** in fluid communication with the cathode **206** and the inlet **210,** and an anode **204.**

In some embodiments, the anode **204** and cathode **206** are spaced apart from each other inside the container **202.** In some embodiments, the anode **204** is in electrical communication **222** with the cathode **206.**

In some embodiments, the greater the surface area of the cathode, and in some embodiments also the surface area of the anode - the better the performance of the electrochemical cell. However, the surface area of the anode **204** and the cathode **206** is limited, and therefore determined, by wallis of the electrochemical cell and hence the cross-section of the electrolysis cell container **202.** The largest dimension of the anode **204** and the cathode **206** is therefore defined by transverse cross-section dimensions of the electrolysis cell container **202.**

In some embodiments, the cathode **206** is at least 50 fold thicker than the anode **204.** In some embodiments, the cathode **206** is at least 60 fold, at least 65 fold, at least 70 fold, at least 75 fold, at least 80 fold, at least 85 fold, at least 90 fold, at least 95 fold, at least 100 fold, at least 110 fold, at least 120 fold, or at least 150 fold, thicker than the anode **204.**

In some embodiments, the container **202** of the electrochemical cell **200** is configured to allow a nitrogen gas to enter through the inlet **210** and to contact the distributor **208.**

The inlet **210** is located across a container wall on the cathode side of the apparatus facing the distributor 208 e.g., in cathode **206** zone. The distributor **208** is disposed between inlet 210 and cathode 206. The inlet **210** may include a pipe of various shapes and sizes, connected to, attached to, or integrally formed with container **202.** The inlet **210** allows gas (e.g., nitrogen) to enter the container **202,** where it comes into contact (e.g., enters) with distributor **208** and is uniformly distributed over a surface of the cathode **206.** In some embodiments, the cathode **206** is at least partially porous and gas exiting distributor 208 is uniformly distributed throughout cathode 206. Optionally, the gas (nitrogen) may be humidified with water vapor.

In some embodiments, the cathode **206** is at least partially porous. In some embodiments, the distributor **208,** is configured to uniformly distribute incoming gas and/or gas containing solution. E.g., distributor 208 may be made of a porous material, comprise a sieve or have a structure similar to that of a showerhead, or the like and is positioned in contact with or in close proximity to the cathode **206,** and pressing the same, in order to allow gas distribution within cathode 206. The distributor **208** is configured to uniformly distribute the gas or gas containing solution over the surface of the cathode **206.**

In some embodiments, the anode **204** comprises an at least partially porous material, and is configured to allow for an electrolyte solution **230** to go through. In some embodiments, the anode **204** is dipped in the electrolyte solution **230.**

Non-limiting exemplary anodes **204** comprise nickel (Ni), iron, zinc, cobalt, chromium, titanium, or any oxide or a combination thereof.

In some embodiments, in the process of nitrogen reduction reaction, there is a hydrogen evolution competing reaction. The anode **204** is dimensioned to curb production of hydrogen. In some embodiments, anode **204** is capable of oxidizing hydrogen. Anode **204,** captures the formed hydrogen that can used, saving energy of the total process. In some embodiments, the anode **204** avoids the over-generation of hydrogen.

In some embodiments, the apparatus **200** has an outlet **220**. In some embodiments, the outlet **220** supports flow of gas. In some embodiments, the outlet **220** is an outlet for the ammonia formed during a nitrogen reduction reaction process. In some embodiments, the outlet **220** may be located in the container **202,** facing the anode **204.** The outlet **220** is configured to provide a pathway for hydrogen gas generated in the process as well as other gasses involved in the ammonia synthesis, e.g., nitrogen or water, to exit container **202.**

In some embodiments, the apparatus **200** comprises a collecting chamber **240.** In some embodiments, the collecting chamber **240,** comprises an acid trap. Collecting chamber **240** may be in the form of a container configured to contain an acid (e.g., sulfonic acid). Collecting chamber **240** comprises an inlet **242,** through which gas (e.g., ammonia and other gasses) exiting via outlet **220** enters collecting chamber **240.**

In some embodiments, the apparatus **200** can work with minimal quantity of electrolyte **230.** Since ammonia dissolves in aqueous solution, the electrochemically generated ammonia saturates quickly in electrolyte **230** and comes out from the cell through outlet **220** and is collected in the collecting chamber **240.**

In some embodiments, apparatus **200,** is configured to synthesize ammonia at a rate (in mol cm$^{-2}$ s$^{-1}$) of $1 \times 10^{-8}$ to $5 \times 10^{-9}$.

In some embodiments, apparatus **200,** is configured to synthesize ammonia at a rate (in mol cm$^{-2}$ s$^{-1}$) of $1 \times 10^{-8}$ to $5 \times 10^{-9}$.

Apparatus **100** and apparatus **200** may have various components of the apparatus disclosed herein, such as any of the valves, sensors, weirs, blowers, fans, dampers, or pumps, etc.

Operation of the gas rate in the inlet, outlet and the pipes, and the recirculation rates may be controlled by a control unit assisted by the valves, sensors, weirs, blowers, fans, dampers, or pumps, etc.

The dimensions of each component of the apparatus are selected to be sufficient, for a given desired fluidization and to provide sufficient contact time to provide e.g., a desired level of water/nitrogen consumption and/or ammonia regeneration.

Conditions may be monitored using any suitable type monitoring devices e.g., a computer-implemented system. Variables that may be tracked include, without limitation, pH, temperature, electric potential, conductivity, turbidity, rate of the gas flow in each inlet or outlet, concentration of the alkali solution. These variables may be recorded throughout apparatus **100** and apparatus **200.**

A monitoring device, a control unit, or a controller (e.g., computer) may also be used to monitor, control and/or automate the operation of the various components of the systems disclosed herein, such as any of the valves, sensors, weirs, blowers, fans, dampers, pumps, etc.

The present invention may be a system, a method, and/or a computer program product. The computer program product may comprise a computer-readable storage medium. The computer-readable storage medium may have program code embodied therewith. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

**The Electrochemical Cell**

According to an aspect of some embodiments of the present invention there is provided an electrolysis cell having an electrocatalyst comprising the disclosed composition in an embodiment thereof. In some embodiments, the electrocatalyst is the cathode.

In some embodiments, the term "electrocatalyst" refers a specific form of a catalyst that functions at electrode surfaces or, in some embodiments, may be the electrode surface itself.

The term "electrochemical cell" or "cell" as used herein refers generally to a device that converts chemical energy into electrical energy, or electrical energy into chemical energy. Generally, electrochemical cells have two or more electrodes and an electrolyte, wherein electrode reactions occurring at the electrode surfaces result in charge transfer processes. Examples of electrochemical cells include, but are not limited to, batteries and electrolysis systems.

In some embodiments, the electrochemical cell is configured to synthesize ammonia at a rate of $1 \times 10^{-11}$ mol $s^{-1}cm^{-2}$ to $1 \times 10^{-7}$ mol $s^{-1}cm^{-2}$ at 1 atm $N_2$.

In some embodiments, the electrochemical cell is configured to synthesize ammonia at a rate of $1 \times 10^{-11}$ mol $s^{-1}cm^{-2}$ to $1 \times 10^{-7}$ mol $s^{-1}cm^{-2}$, $5 \times 10^{-11}$ mol $s^{-1}cm^{-2}$ to $1 \times 10^{-7}$ mol $s^{-1}cm^{-2}$, $10 \times 10^{-11}$ mol $s^{-1}cm^{-2}$ to $1 \times 10^{-7}$ mol $s^{-1}cm^{-2}$, $1 \times 10^{-10}$ mol $s^{-1}cm^{-2}$ to $1 \times 10^{-7}$ mol $s^{-1}cm^{-2}$, $10 \times 10^{-10}$ mol $s^{-1}cm^{-2}$ to $1 \times 10^{-7}$ mol $s^{-1}cm^{-2}$, $1 \times 10^{-11}$ mol $s^{-1}cm^{-2}$ to $1 \times 10^{-8}$ mol $s^{-1}cm^{-2}$, or $1 \times 10^{-10}$ mol $s^{-1}cm^{-2}$ to $1 \times 10^{-8}$ mol $s^{-1}cm^{-2}$, including any range therebetween.

In some embodiments, the electrochemical cell is configured to synthesize hydrogen.

The present inventors have now surprisingly uncovered that the disclosed electrocatalyst enhances nitrogen reduction reaction.

In some embodiments, the nitrogen reduction reaction is performed in an alkaline electrolyte solution. In some embodiments, the solution refers to an aqueous solution.

In some embodiments, the solution refers to a non-alkaline solution.

Non-limiting examples of non-alkaline solutions according to the present invention include $Na_2SO_4$, NaCl, KCl, KBr, $KnO_3$, $NaNO_3$, $NaClO_4$ $KClO_4$, and $KH_2PO_4$.

The alkali aqueous solution refers that the aqueous solution is basic, and, as used herein, the alkali aqueous solution denotes a hydroxide of an alkali metal or an alkali earth metal element.

In some embodiments, the alkaline electrolyte solution is in the pH value of at least pH 11. In some embodiments, the alkaline electrolyte solution is in the pH value of at least pH 12. In some embodiments, the alkaline electrolyte solution is in the pH value of at least pH 13. In some embodiments, the alkaline electrolyte solution comprises a sodium hydroxide (NaOH) solution. In some embodiments, the alkaline electrolyte solution comprises a potassium hydroxide (KOH) solution. In some embodiments, the alkaline electrolyte solution comprises a lithium hydroxide (LiOH) solution. In some embodiments, the alkaline electrolyte concentration is in the range of 0.001M to 5M. In some embodiments, the alkaline electrolyte concentration is in the range of 0.01M to 3M. In some embodiments, the alkaline electrolyte concentration is in the range of 0.05M to 1M. In some embodiments, the alkaline electrolyte concentration is in the range of 0.05M to 0.5M.

In some embodiments, the alkaline electrolyte concentration is in the range of 0.5M to 3.5M. In some embodiments, the alkaline electrolyte concentration is approximately 3M.

**Ammonia synthesis**

In some embodiments, ammonia may be synthesized by using the electrolytic cell disclosed herein.

In some embodiments, there is provided a process of synthesizing ammonia, the process comprising: (i) contacting a humidified nitrogen gas with the cathode of the electrochemical cell disclosed herein in any embodiment thereof, and (ii) applying an electric potential to the anode and the cathode, thereby obtaining the ammonia.

The ammonia is synthesized by using an alkali solution as described above, according to an embodiment.

In some embodiments, the ammonia is synthesized by using an aqueous solution.

In some embodiments, the solution refers to a non-alkaline solution.

Non-limiting examples of non-alkaline solutions according to the present invention include $Na_2SO_4$, NaCl, KCl, KBr, $KnO_3$, $NaNO_3$, $NaClO_4$ $KClO_4$, and $KH_2PO_4$.

In some embodiments, the synthesis of the ammonia is performed at a temperature of from 10 °C to 80 °C, 20 to 80 °C, 10 °C to 70 °C, 20 °C to 70 °C, 30 °C to 80 °C, 30 °C to 70 °C 30 °C to 65 °C, or 30 °C to 60 °C, including any range therebetween.

In some embodiments, the synthesis of the ammonia is performed at a temperature of from 25 to 30 °C. In some embodiments, the synthesis of the ammonia is performed at a temperature of from 30 to 50 °C.

In some embodiments, the synthesis of the ammonia is performed at a pressure of 500 to 2000 mm Hg. In some embodiments, the synthesis is performed at a pressure of 500 to 1000 mm Hg.

In some embodiments, the synthesis of the ammonia is performed at an ambient temperature. In some embodiments, the synthesis of the ammonia is performed at an ambient pressure. In some embodiments, the synthesis of the ammonia is performed at an ambient pressure and at an ambient temperature.

In some embodiments, the term "ambient pressure" is intended to mean approximately 740 mm Hg to about 780 mm Hg.

In some embodiments, the electric potential used in the synthesis of the ammonia is in the range of -0.4 V to 0.2 V, -0.3 V to 0.2 V, -0.3 V to 0.2 V, -0.3 V to 0.2 V, -0.1 V to 0.2 V, 0 V to 0.2 V, -0.4 V to 0.1 V, -0.4 V to -0.1 V, or -0.4 V to -0.2 V, including any range therebetween.

In some embodiments, the synthesis of the ammonia is performed at low electric potential. In some embodiments, the low electric potential avoid hydrogen evolution competing reactions.

In some embodiments, the rate of ammonia production can be increased by increasing the electric potential.

In some embodiments, the synthesis of ammonia is characterized by a faradaic efficiency in the range of 1% to 30%, 1% to 25%, 1% to 20%, 1% to 15%, 1% to 10%, 3% to 30%, 5% to 30%, 5% to 25%, 5% to 20%, 5% to 15%, or 5% to 10%, including any range therebetween.

In some embodiments, the synthesis of the ammonia is characterized by a faradaic efficiency of at least 1% wherein the electric potential is 0.023 V. In some embodiments, the synthesis of the ammonia is characterized by a faradaic efficiency of at least 3%, 5%, 8%, 10%, 12%, 15%, 18%, 20%, or 25%, wherein the electric potential is 0.023 V.

In some embodiments, the synthesis of the ammonia is characterized by a faradaic efficiency of at least 1% wherein the electric potential is 0.123 V. In some embodiments, the synthesis of the ammonia is characterized by a faradaic efficiency of at least 2% wherein the electric potential is 0.123 V. In some embodiments, the synthesis of the ammonia is characterized by a faradaic efficiency of at least 3% wherein the electric potential is 0.123 V. In some embodiments, the synthesis of the ammonia is characterized by a faradaic efficiency of at least 4% wherein the electric potential is 0.123 V. In some embodiments, the synthesis of the ammonia is characterized by a faradaic efficiency of at least 5% wherein the electric potential is 0.123 V.

In some embodiments, the synthesis of the ammonia is characterized by a rate of ammonia production is in the range of $1 \times 10^{-11}$ mol $s^{-1}cm^{-2}$ to $1 \times 10^{-7}$ mol $s^{-1}cm^{-2}$, $5 \times 10^{-11}$ mol $s^{-1}cm^{-2}$ to $1 \times 10^{-7}$ mol $s^{-1}cm^{-2}$, $10 \times 10^{-11}$ mol $s^{-1}cm^{-2}$ to $1 \times 10^{-7}$ mol $s^{-1}cm^{-2}$, $1 \times 10^{-10}$ mol $s^{-1}cm^{-2}$ to $1 \times 10^{-7}$ mol $s^{-1}cm^{-2}$, $10 \times 10^{-10}$ mol $s^{-1}cm^{-2}$ to $1 \times 10^{-7}$ mol $s^{-1}cm^{-2}$, $1 \times 10^{-11}$ mol $s^{-1}cm^{-2}$ to $1 \times 10^{-8}$ mol $s^{-1}cm^{-2}$, or $1 \times 10^{-10}$ mol $s^{-1}cm^{-2}$ to $1 \times 10^{-8}$ mol $s^{-1}cm^{-2}$, including any range therebetween.

*General*

The terms "comprises", "comprising", "includes", "including", "having" and their conjugates mean "including but not limited to". The term "consisting of means "including and limited to". The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, and electrochemical arts.

In those instances where a convention analogous to "at least one of A, B, and C, etc." is used, in general such a construction is intended in the sense one having skill in the art would understand the convention (*e.g.*, "a system having at least one of A, B, and C" would include but not be limited to systems that have A alone, B alone, C alone, A and B together, A and C together, B and C together, and/or A, B, and C together, etc.).

It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## EXAMPLES

Reference is now made to the following examples, which together with the above descriptions illustrate some embodiments of the invention in a non-limiting fashion.

## EXAMPLE 1

MATERIALS AND METHODS

Ruthenium platinum black, normally Pt 50%, Ru 50% (atomic wt%), HiSPEC 6000 was purchased from Alfa Aesar. Vulcan XC-72 was procured from Cabot. Potassium hydroxide, isopropyl alcohol, PTFE (60 wt%) solution and nickel foil were procured from Aldrich. Anionic ionmer was purchased from Hephas Energy Co. Ltd. Toray carbon was purchased from fuel cell store.com$^{tm}$.

RuPt/C slurry was prepared by adding RuPt and Vulcan XC 72 (9:1) into glass vial, to this mixture milli-Q water, isopropyl alcohol (1:1), PTFE solution (5 wt%) and inomer (2 wt%) were added and ultra-sonicated for 15 min. The prepared slurry was brush coated on Toray carbon electrode (1 cm$^{-2}$) and dried at 80 °C under vacuum overnight.

The Biologic VSP workstation was used to carry out all electrochemical experiments. Hiden analytic HPR 20 mass spectrometry was used for qualitative analysis of gasses. The electrochemical experiments were performed using three electrode system consisting of RuPt/C as working, nickel foil as counter and mercury mercuric oxide (MMO) reference electrodes. 1.0 M KOH solution was used as electrolyte. The dissolved oxygen in electrode was removed by purging argon gas (99.999% pure) for 15 min. For electrochemical synthesis of ammonia, nitrogen gas (99.999% pure) was purged prior to the experiment. The electrochemically produced ammonia gas was trapped in 1 mM $H_2SO_4$ solution and rate of ammonia formation was calculated using the following equation 1:

$$r_{NH3} = \frac{[NH_4^+] \times V}{t \times A} \qquad [1]$$

where, $[NH_4^+]$ is the measured ammonium ion concentration, V is the volume of solution for ammonia collection, t is the time of electrochemical reaction and A is the area of the working electrode.

**EXAMPLE 2**

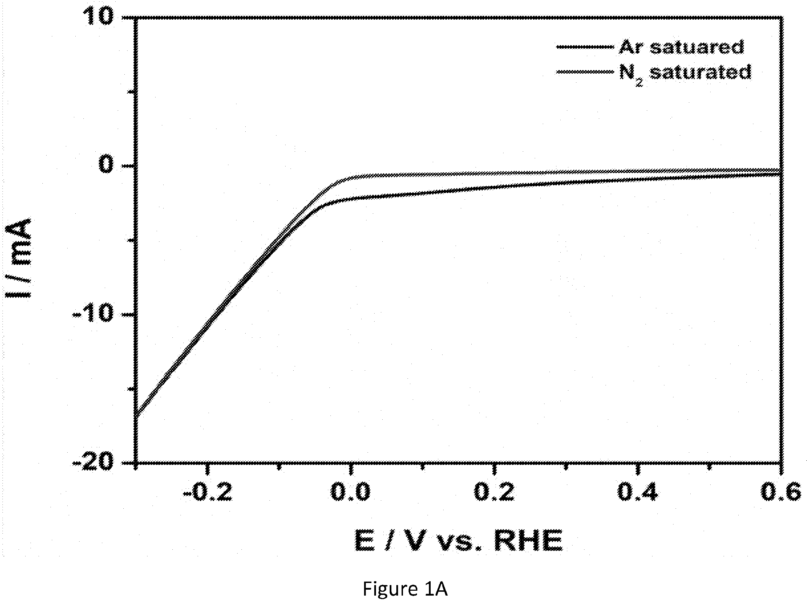

**Figure 1A** shows linear sweep voltammograms (LSVs) of Vulcan XC 72 modified working electrodes in argon and nitrogen saturated solution. As expected, Vulcan XC-72 carbon did not show any catalytic activity for nitrogen reduction reaction (NRR).

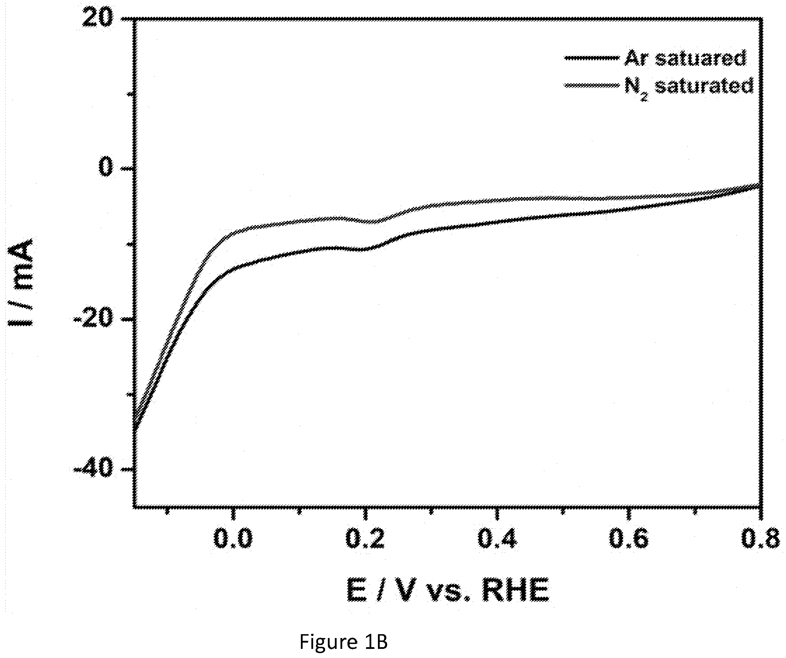

In the present work, Pt/C modified electrode did not illustrate any catalytic activity towards aforementioned reaction **(Figure 1B).** However, reduction peak ca. 0.2 V was noticed, which could be due to desorption of under potential deposited hydrogen.

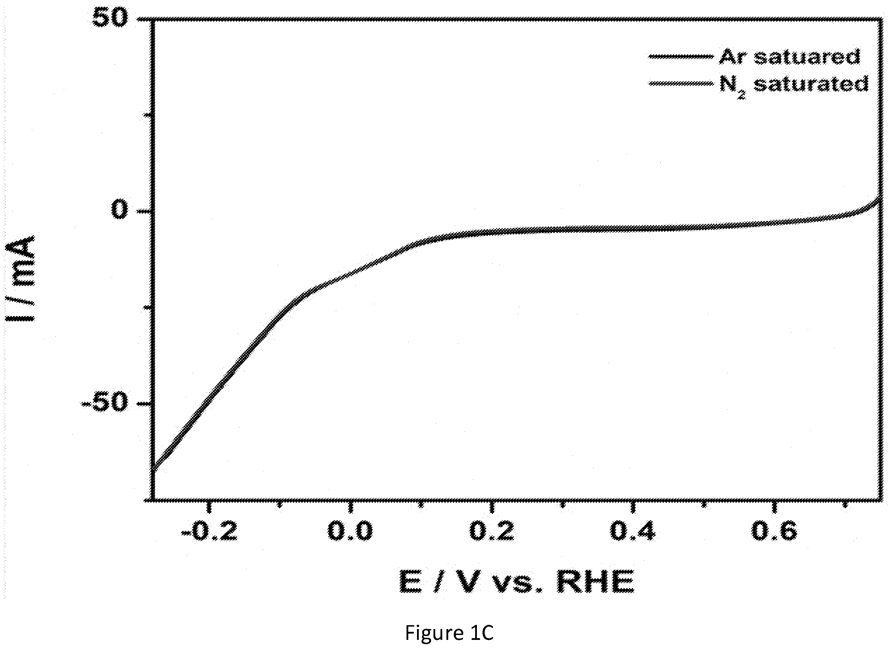

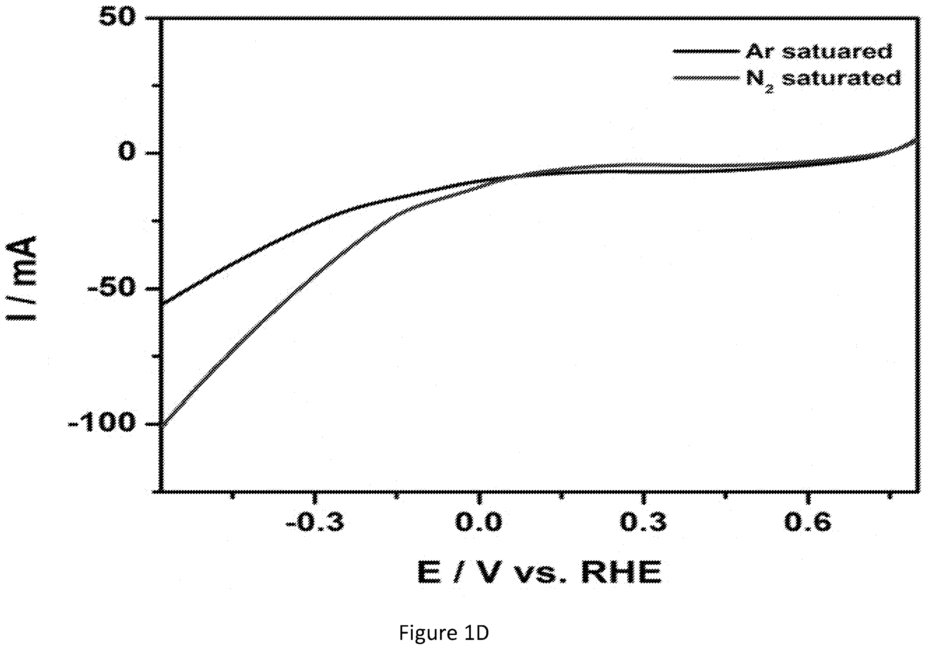

Similarly, **Figure 1C** exhibits LSVs of ruthenium/carbon (Ru/C) towards NRR. From this graph it can be observed that there is no significant change in the onset potential of the reaction under argon and nitrogen saturated solutions. Nevertheless, RuPt/C catalyzed electrode exhibited lower onset potential (ca.0.05V) than platinum carbon (Pt/C, ca.0.025V) and ruthenium carbon (Ru/C, ca.0.1V) electrodes in nitrogen saturated solution which is obviously due to NRR (see Figure 1D). The observed onset potential of NRR is more positive (i.e. -0.077V vs RHE). At a more negative cell potential, the rate of ammonia formation decreased significantly due to hydrogen reduction reaction and became more dominant than that of NRR.

Without being bound by any particular mechanism, it is assumed that the lower onset potentials and higher NRR currents are attributed to bifunctional mechanism, where the $N_2$ is adsorbed on Ru site while the Pt-H provide the hydrogen in the PtRu catalysts. According to reaction (1):

$$Ru\equiv N_{ad} + 3Pt\text{-}H_{ad} \rightarrow PtRu + NH_3 \qquad (1)$$

Alternatively, the bifunctionalty of PtRu can also be ascribed to removal of hydrogen from Ru sites through reaction 2:

$$Ru\text{-}H_{ad} + Pt\text{-}H_{ad} \rightarrow H_2 + RuPt \qquad (2)$$

***The effect potential and temperature***

As mentioned above, electrochemical ammonia synthesis was carried out in electrochemical cell consisting of RuPt/C working electrode, nickel foil as counter electrode and MMO (1.0M KOH) as reference electrode in 1.0M KOH solution.

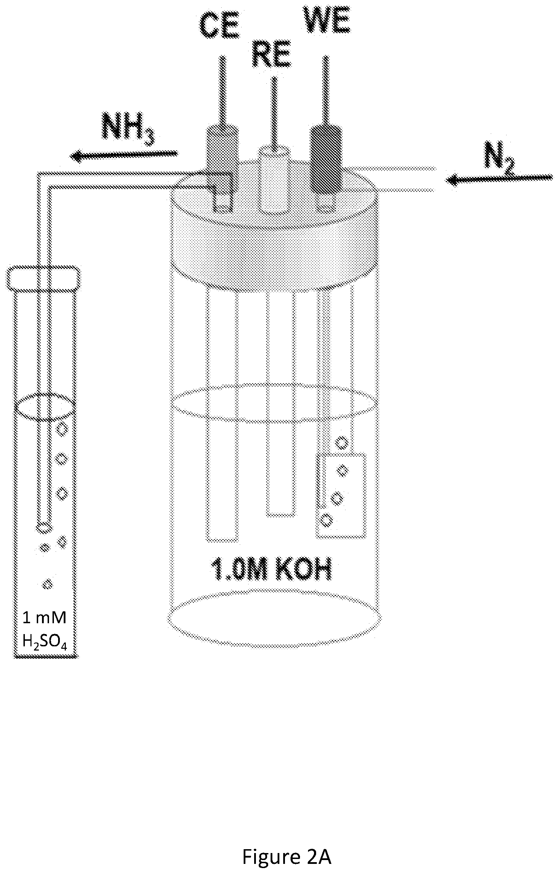

During the course of the reaction, known volume of nitrogen gas was continuously fed into vicinity of cathode as shown in **Figures 2A-C** along with plausible reaction for ammonia formation. At applied potential nitrogen gas got reduced into ammonia gas at the cathode electrode.

In exemplary procedures, the produced gases were bubbled in 1mM $H_2SO_4$ trap. The minimum threshold potential is required below which electrochemically it is not possible to produce ammonia:

$$\text{Cathode: } 2N_2 + 12H_2O + 12e^- \rightarrow 4NH_3 + 12OH^- \qquad (1)$$

$$\text{Anode: } 12OH^- \rightarrow 3O_2 + 6H_2O + 12e^- \qquad (2)$$

$$\text{Overall: } 2N_2 + 6H_2O \rightarrow 4NH_3 + 3O_2 \qquad (3)$$

**Figure 3A** depicts the effect of various applied potentials towards NRR at RuPt/C electrode in the cell configuration described above. In the present work all the potentials were measured versus MMO and converted into reversible hydrogen electrode (RHE) by calibration as shown in **Figure 3B.** The rate of ammonia electrochemically formed and corresponding Faradaic efficiency at different applied potentials are given in **Figure 3C** and summarized in **Table** 1. A maximum faradaic efficiency of 13.2% was observed at an applied potential of 0.123 V with rate of ammonia formation of $3.0 \times 10^{-10}$ mols$^{-1}$cm$^{-2}$. On contrary, at -0.077V maximum amount of ammonia produced ($6.37 \times 10^{-10}$ mols$^{-1}$cm$^{-2}$) with the Faradic efficiency of 1.1%. Indeed these obtained results were quite comparable than previously reported articles with similar reaction conditions as shown in **Table 2.**

**Table 1.** Effect of applied potential on electrochemical ammonia synthesis

| Applied Potential E / V vs. RHE | Quantification of ammonia using Nesslers reagent / $mols^{-1}cm^{-2}$ | Ammonia formation (Theoretical) | Ammonia formation (Experimental) | Efficiency of ammonia produced / % |
|---|---|---|---|---|
| 0.123 | $3.0\times10^{-10}$ | 0.136 mg | 0.018 mg | 13.2 |
| 0.023 | $6.12\times10^{-10}$ | 0.936 mg | 0.037 mg | 4 |
| -0.077 | $6.37\times10^{-10}$ | 3.3 mg | 0.038 mg | 1.15 |
| -0.177 | $5.95\times10^{-10}$ | 4.78 mg | 0.036 mg | 0.75 |
| -0.277 | $5.45\times10^{-10}$ | 9.56 mg | 0.033 mg | 0.35 |

**Table 2.** Comparison of various catalysts used for electrochemical ammonia synthesis under similar conditions

| Catalyst | Yield of $NH_3$ $g_{NH3}$ $s^{-1}cm^{-2}$ | Method used for $NH_3$ quantification | Conditions | Reference |
|---|---|---|---|---|
| Ru based electrode | $3.57\times10^{-10}$ | phenate method | 20-90 °C and atmospheric pressure | Kordali et al. Chem. Commun. (2000) 1673. |
| $Fe_2O_3$-CNT | $6.11\times10^{-10}$ | ammonia ion selective electrode and spectrophotometry measurement with salicylic acid | Room temperature and atmospheric pressure | Bao et al. Adv. Mater. 29 (2017) 1. |
| Au-nanorods | $4.57\times10^{-10}$ | Nessler's reagent And ammonia colorimetric assay kit | Room temperature and atmospheric pressure | Li et al. Nat. Chem. 4 (2012) 934. |
| Amorphous Au nanoparticles on $CeO_x$-RGO support | $2.3\times10^{-9}$ | Indophenol blue method | Room temperature and atmospheric pressure | Kitano et al. Nat. Chem. 4 (2012) 934 |
| Au-subnano clusters on $TiO_2$ | $5.9\times10^{-9}$ | Indophenol blue method | Room temperature and atmospheric pressure | Bielawa et al. Angew. Chemie - Int. Ed. 40 (2001) 1061. |
| RuPt/C | $1.04\times10^{-8}$ | Nessler's reagent | 50 °C and atmospheric pressure | Present disclosure |

The ammonia formation rate increased from potential 0.123 to -0.077 V and then decreased. However, Faradaic efficiency decreased as the applied potential increased. This illustrates that at relatively lower potential nitrogen reduction reaction was predominating which competes with by hydrogen evolution at higher potential.

The rate of NRR was measured at 30, 50 and 70 °C as shown in **Figure 3D.** Electrochemical ammonia formation increases from 30 to 50 °C increasing temperature but slightly decreases at 70 °C. **Figure 3E** presents the rate of ammonia formation and Faradaic efficiency at various temperatures. Dissolved ammonia tests using Nessler reagent confirmed the presence of ammonia in the electrolyte, which is formed in the course of electrochemical nitrogen reduction. At 70 °C the solubility of ammonia in electrolyte significantly decreases from $3\times10^{-10} mols^{-1}cm^{-2}$ to $9\times10^{-11} mols^{-1}cm^{-2}$. The concentration of ammonia in alkaline solution decreases as the temperature increases, for instance, ammonia solubility was decreased from 39.54 g/Liter to 19.71 g/Liter when temperature was raised from 50 to 70 °C.

*Specificity and stability of RuPt/C*

Without being bound by any particular theory, the associative and dissociate reaction mechanisms are two possible pathways proposed for nitrogen reduction reaction to form ammonia. Though theoretically both mechanisms are feasible depending on metal surface there are no experimental evidence which can specifically explain either one or both the mechanisms. However, during course of nitrogen reduction reaction, hydrazine may also be produced along with ammonia as seen on tetrahydral gold nanorods surface via the following reaction.

$$*N_2 \rightarrow *NNH \rightarrow *NHNH \rightarrow *NHNH_2 \rightarrow *NH_2NH_2 \rightarrow NH_2NH_2+* \text{ --------} \qquad (4)$$

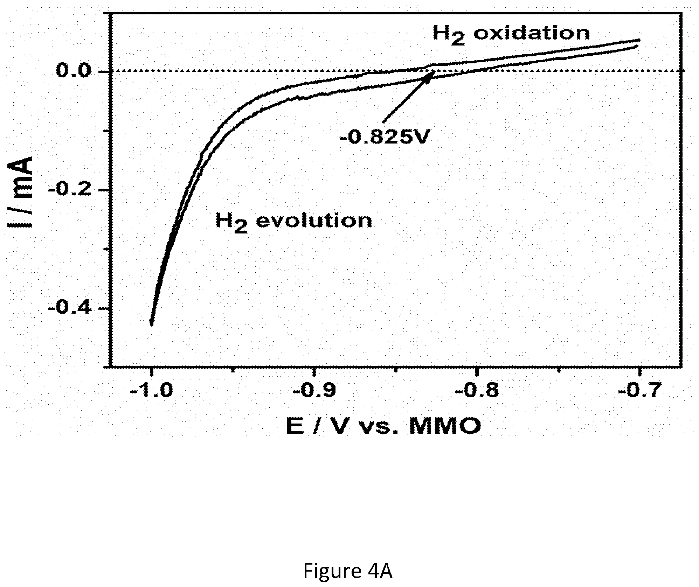

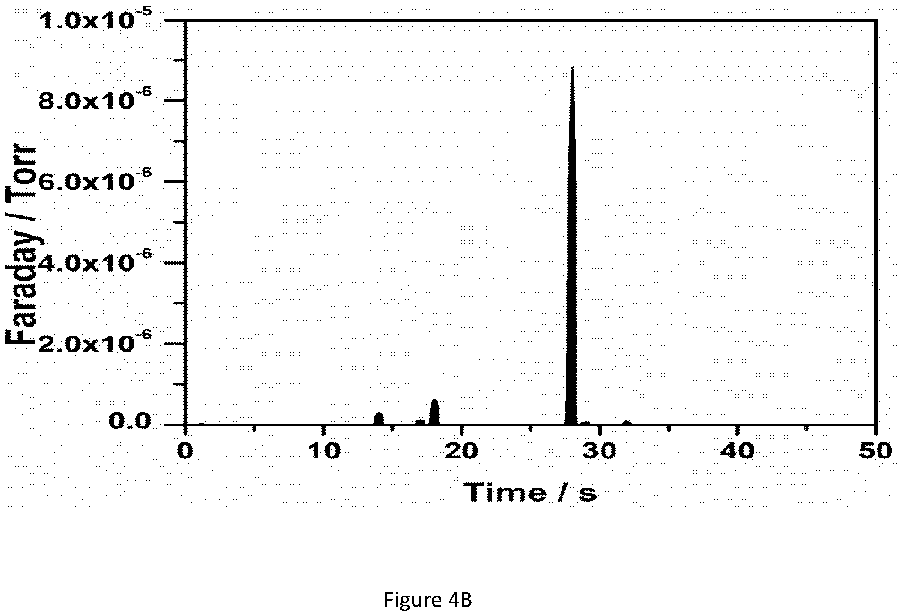

Selectivity study of ammonia formation on RuPt/C was carried out by analysis of the gas stream evolving from the cathode during the reaction. Out coming gas mixture was sampled on line and introduced to a mass spectrometry analyzer. A Mass spectrum of the gas stream produced at 50 °C under open circuit potential of 0.06 V is shown in **Figure 4** the fragment ions at m/z 17 and 18 assigned for water vapors. Similarly, nitrogen fragment ions found to be at m/z 14 and 28.

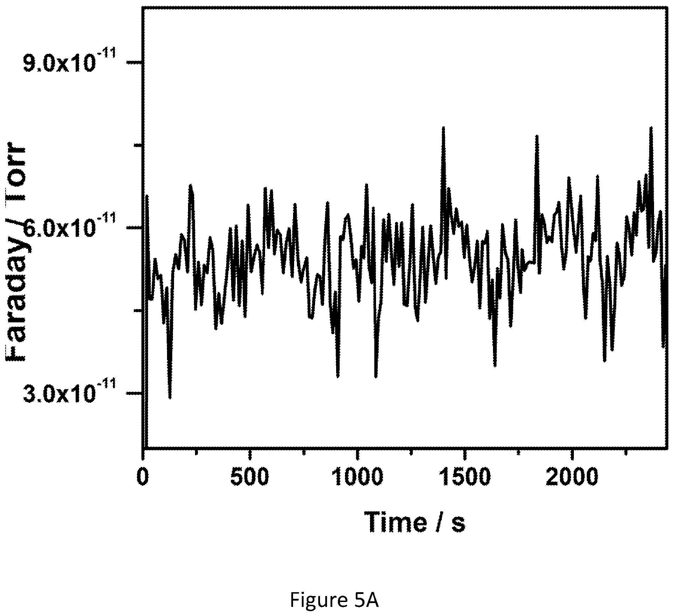

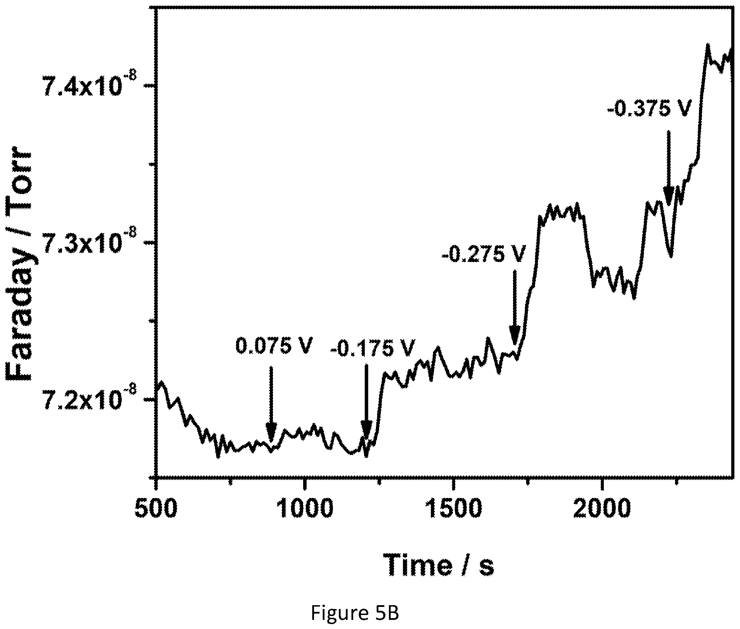

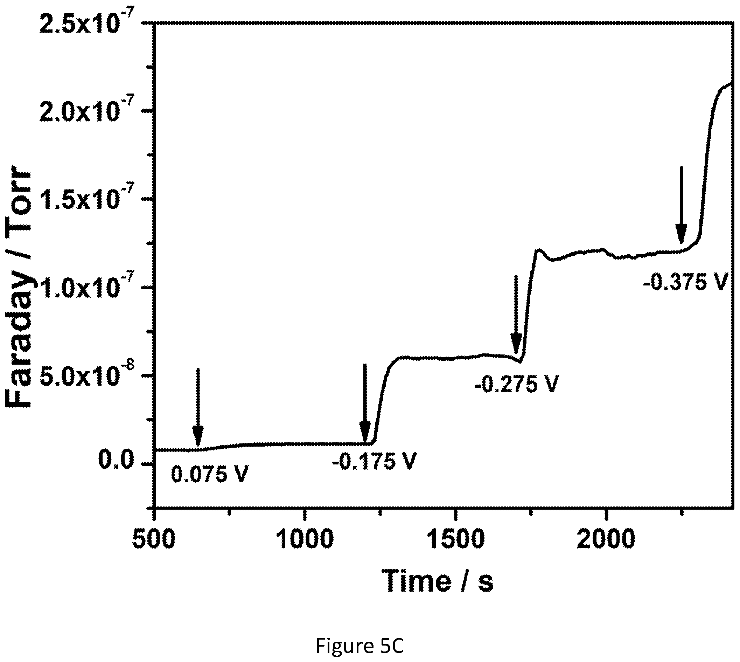

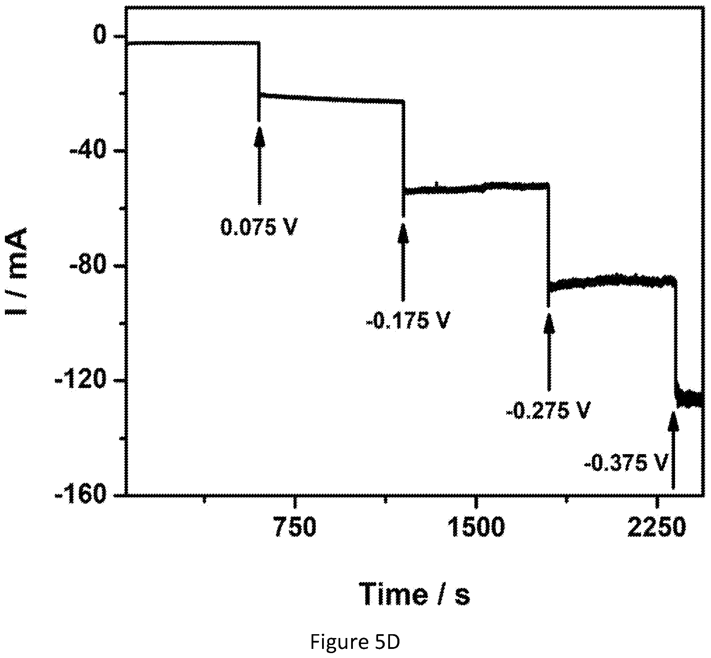

In the present disclosure multi ion detection mode has been employed to detect hydrazine, ammonia and hydrogen by applying their corresponding masses. **Figures 5A, B and C** show mass $M^+$ of detection of hydrazine ($M^+=31$), ammonia ($M^+=17$) and hydrogen ($M^+=2$), respectively. There are abrupt change upon change in the applied potential ranging from 0.075 to -0.375 V **(Figure 5D)** correlating the current with ammonia and hydrogen gas evolution. On the other hand, there was no change in the hydrazine trace at this potential and depicted a signal of very low intensity compare to ammonia.

It can be concluded that no NRR reaction proceeds via hydrazine formation as a stable final product of nitrogen reduction. Furthermore, as the potential increased from 0.075 to - 0.375 V the ammonia and hydrogen gasses were liberated in electrochemical cell and they were detected in mass spectrometry as shown in **Figure 5B and C**, respectively.

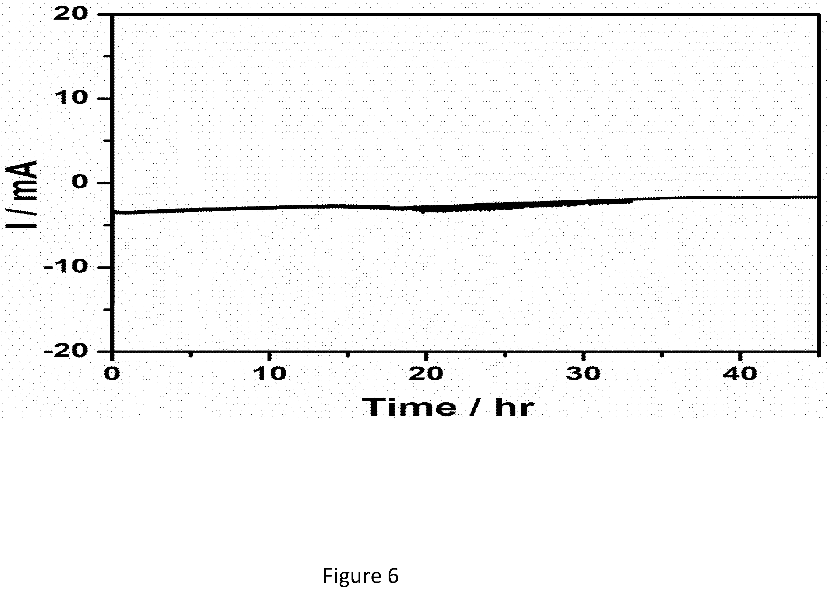

For practical applications, stability of the catalyst is one of the important parameters. To ascertain stability of RuPt/C electrode chronoamperometric test was carried out. **Figure 6** depicts that RuPt/C demonstrate decent stability for nitrogen reduction reaction up to 45 long hours. There was ca. 58% retention in current efficiency after 45 hours which suggests that RuPt/C electrode showed appreciable stability.

Taken together, RuPt/C was used as catalyst for electrochemical synthesis ammonia using water and nitrogen at ambient pressure and lower temperature. The linear sweep voltametric experiments of Ru/C, Pt/C and RuPt/C clearly depicted that the latter showed superior nitrogen reduction reaction activity. Thus, the high rate of ammonia formation was due to synergistic effect of RuPt alloy. Both temperature and applied potential have significant influence on the rate of ammonia formation. The present catalyst showed better stability and specificity towards nitrogen reduction reaction to form ammonia.

## EXAMPLE 3

*Materials and methods*

Iron nitrate nonahydrate was purchased from Strem Chemicals. Vulcan XC-72 was procured from Cabot. Potassium hydroxide, isopropyl alcohol, concentrated ammonia solution (28 wt.%), titanium dioxide (325 mesh anatase) and nickel foil were procured from Aldrich. $Fe_2O_3/TiO_2/C$ ink was prepared by mixing the catalyst, Vulcan XC-72 carbon and Nafion® (84, 8 and 8 wt.%, respectively) in a glass vial, with water and isopropyl alcohol (1:1 v/v) added to the mixture. This slurry was stirred overnight on a magnetic stirrer, brush-coated onto nickel foam and dried at 90 °C for 2 h in an air-convection oven. The commercials catalysts such as titanium powder, titanium nanoparticles, titanium hydride were purchased from Strem Chemicals. Platinum black, palladium black and ruthenium platinum alloy were procured from Alfa Aesar. The anionic membranes (quaternary ammonium polysulfone, thickness 40 $\mu$m) were bought from Hephas Energy Co. Ltd.

*Synthesis of $Fe_2O_3/TiO_2$*

6 mmol (2.4g) of iron(III)-nitrate nonahydrate was dissolved in 30 ml of distilled water. To this reaction mixture, 0.18g of titanium dioxide was added and sonicated for 10 minutes. The mixture was placed on a magnetic stirrer, and 7 ml of concentrated ammonia solution (28-30 wt.%) was added dropwise under constant stirring until pH 10 was reached (indicating a small excess of ammonia solution). During the synthesis the light-yellow reaction mixture turned to a thick dark-brown slurry. This product was heated gradually up to 80 °C for 2-3 hours until the ammonia smell disappeared. The resulting thick mass was transferred into a hydrothermal bomb, and an appropriate amount of water was added until 70% of the total volume of the hydrothermal bomb was filled with liquid. Finally, the hydrothermal reaction was carried out at 100 °C for 15 hours. After that, the reaction mixture was cooled down to room temperature. The final product was filtered and washed extensively with Milli-Q® water to remove the ammonium nitrate formed during the reaction (complete removal of ammonium nitrate was confirmed by Nessler's reagent). The obtained product was dried at 80 °C overnight as previously described. The $Fe^{3+}$ ions were precipitated as hydrated iron(III) oxide under the alkaline condition, and the obtained product was further transformed into FeOOH, as shown in Reactions (1) and (2), respectively. Under heating, the Fe(III)OOH was converted into $Fe_2O_3$, as given in Reaction (3).

$$Fe^{3+}_{(aq)} + 3NH_{3(aq)} + 3H_2O_{(l)} \rightarrow Fe(OH)_{3(s)} + 3NH_4^{+}_{(aq)} \qquad \textbf{(1)}$$

$$Fe(OH)_{3(s)} \rightarrow FeOOH_{(s)} + H_2O_{(l)} \qquad \textbf{(2)}$$

$$2FeOOH_{(s)} \rightarrow Fe_2O_{3(s)} + H_2O_{(l)} \qquad \textbf{(3)}$$

### Instrumentation and methods

A BioLogic VSP potentiostat was used in all electrochemical experiments. A Hiden Analytical HPR-20 mass spectrometer was used for qualitative analysis of gases. The electrochemical experiments were performed using a three-electrode system consisting of $Fe_2O_3/TiO_2/C$-coated nickel foam as a working electrode, nickel foil as a counter electrode and mercury/mercury-oxide (MMO, 1.0 M KOH) as a reference electrode. A 1.0 M KOH solution was used as an electrolyte in all experiments. All the potentials were measured versus a mercury/mercury-oxide reference electrode and converted by calibration method into a potential versus reversible hydrogen electrode (RHE). When nickel foil was used as the working electrode (even at high overpotentials) there was no detectable ammonia oxidation. Therefore, pure nickel foil was used as a counter electrode in the present work without a risk of possible consumption of electrochemically produced ammonia. The dissolved oxygen was removed from the electrolyte by purging with argon gas (99.999% pure) for 20 min. For electrochemical synthesis of ammonia, high-purity nitrogen gas (99.999% pure) was purged prior to the experiment for 20 min. The electrochemically produced ammonia gas was trapped in a 1 mM $H_2SO_4$ solution, and the rate of ammonia formation was calculated using the following equation (Equation 4):

$$r_{NH3} = \frac{[NH_4^+] \times V}{t \times A}$$

$$\textbf{(4)}$$

where: [NH4+] is the measured ammonium ion concentration, V is the volume of solution used for ammonia collection, t is the time of electrochemical reaction, and A is the area of the working electrode. During the electrochemical reaction a constant flow of either nitrogen or air was introduced into the cell at a flow rate of 50 cm3 min-1. At the applied potential, nitrogen gas was reduced into ammonia at the cathode, as shown in Figure 2A. The acid trap and the alkaline electrolyte solutions were used for the quantification of electrochemically produced ammonia by adding Nessler's reagent and measuring the absorbance at 420 nm (Figure 2A). The exact ammonia concentration was determined by linear regression (5-point calibration curve). The final amount of ammonia obtained from NRR was calculated by adding the ammonia content found in the acid trap to that present in the alkaline electrolyte.

### Characterization of $Fe_2O_3/TiO_2$

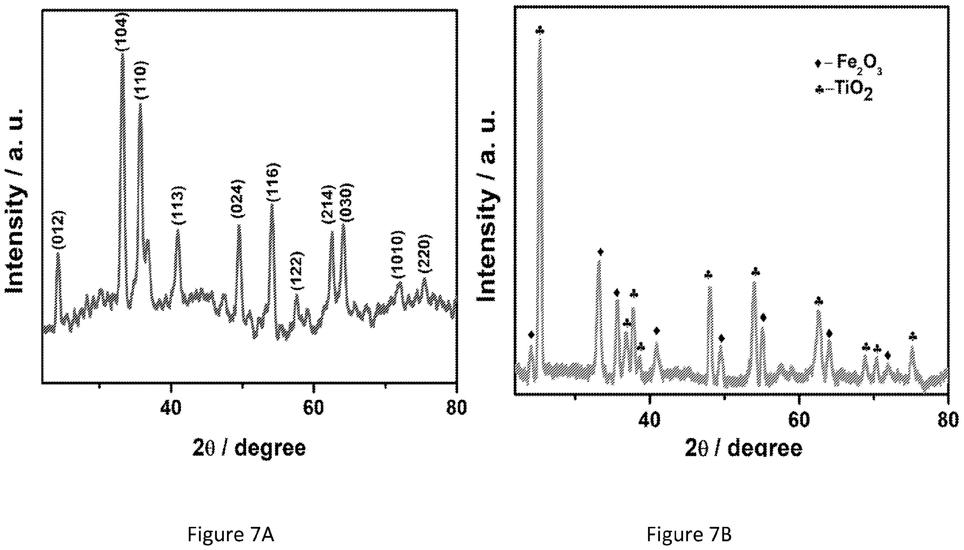

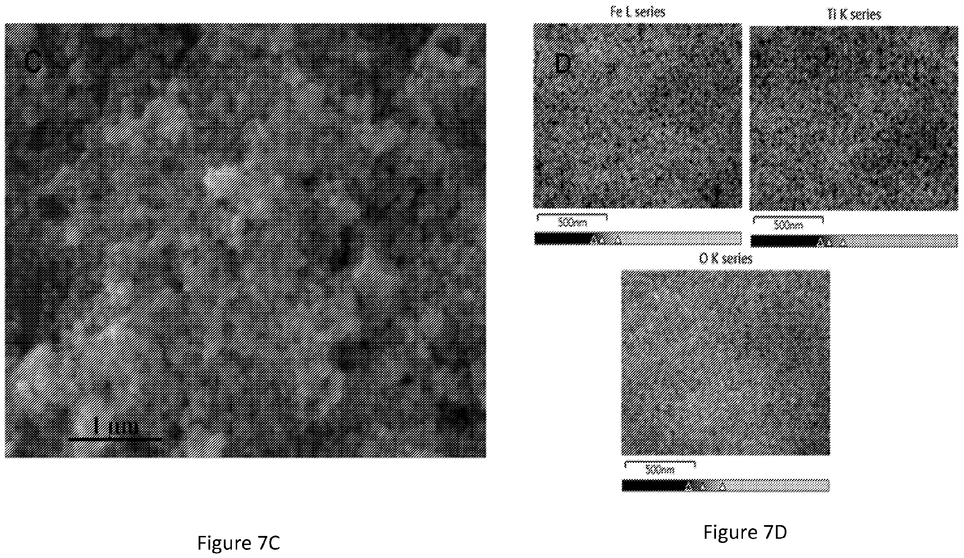

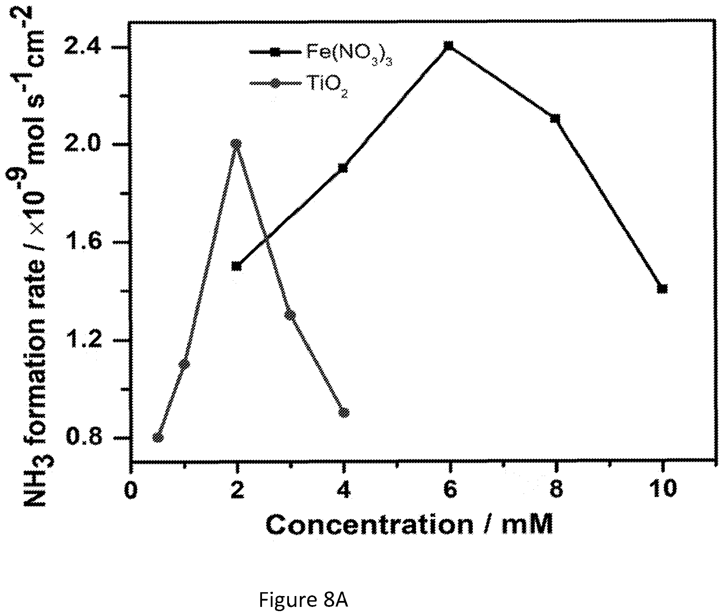

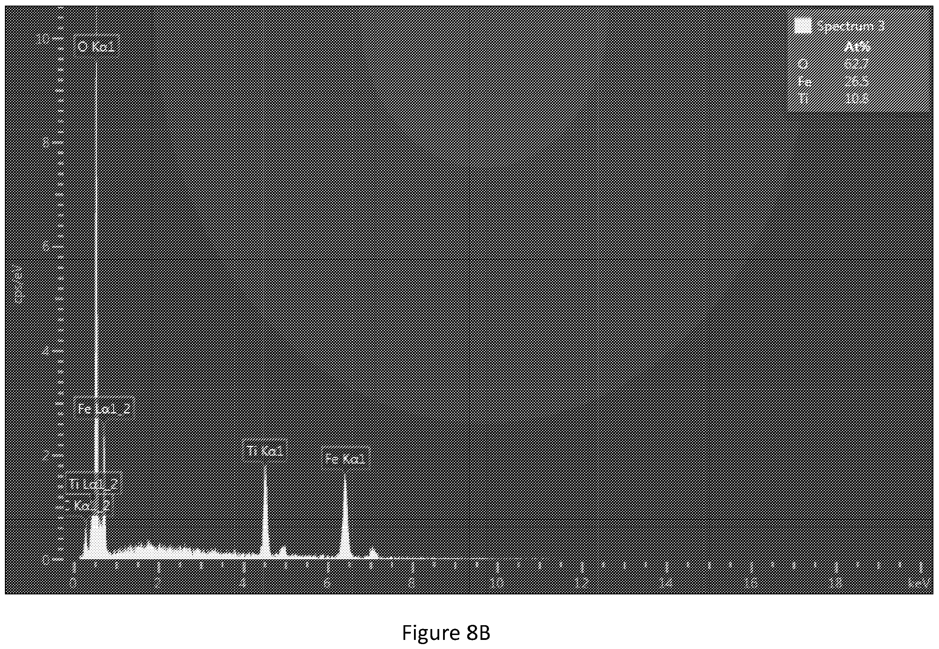

$Fe_2O_3$ powder was synthesized by using the aforementioned synthesis protocol in ammonia solution. Figures 7A-B show the X-ray diffraction patterns of $Fe_2O_3$ and $TiO_2$-based composites, respectively. The peaks at 24.14, 33.16, 35.60, 40.83, 49.45, 54.08, 62.43 and 63.99° (Figure 7A) show good agreement with the literature data corresponding to $Fe_2O_3$ (No. 33-0664: a = 5.0356 Å, c = 13.7489 Å). On the other hand, the 2-theta peaks at 25.27, 37.77, 48.01, 53.88, 55.03, 62.66, 68.78, 70.30 and 75.04° correspond to the (101), (004), (200), (105), (211), (204), (116), (220) and (215) planes of an anatase crystalline $TiO_2$ phase (Figure 1B). According to Equations 2 and 3, FeOOH particles were formed during the addition of ammonia solution to the suspension of $TiO_2$ support and were then converted to a crystalline $Fe_2O_3$ phase during the hydrothermal treatment. Figs. 7C-D show SEM and EDX mapping of the $Fe_2O_3/TiO_2$ composite. The SEM image shows the aggregate of $Fe_2O_3$ particles on the surface of the underlying $TiO_2$ (40 microns). According to the results of EDX mapping, $Fe_2O_3/TiO_2$ composites contain 26.5 and 10.8 atomic % of Fe and Ti, respectively. The optimal ratio of starting materials (i.e. 6 mmol $Fe(NO_3)_3$ and 2 mmol $TiO_2$) is optimized by determining the highest ammonia formation ratio for different amounts of iron(III) nitrate and titanium dioxide used for the synthesis of the catalyst, as shown in Figure S5. By using the experimentally determined optimal ratios of the precursors, the atomic ratios of Fe, Ti and O were theoretically calculated to be 28, 9.5 and 62%, respectively. These values are very close to the ratio found by EDX analysis (as given in Figure 8), proving that the optimal composition of the catalyst was used in this work.

*Electrochemical measurements*

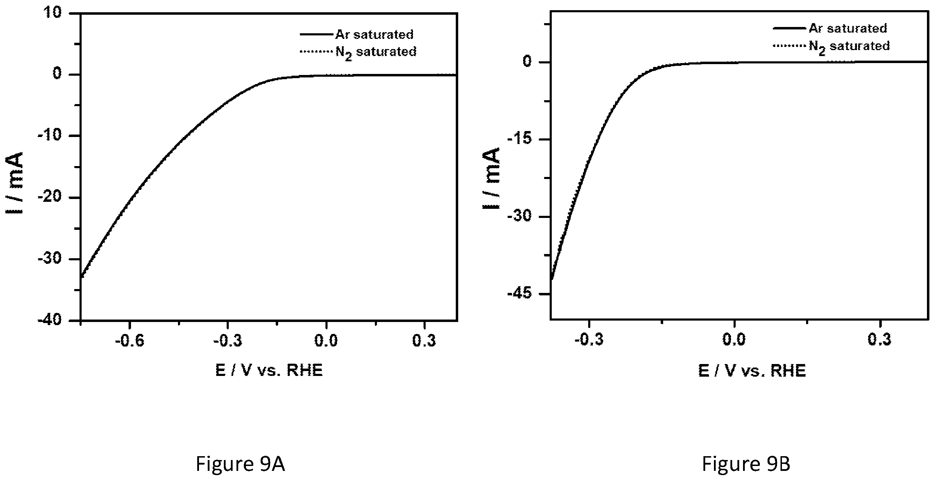

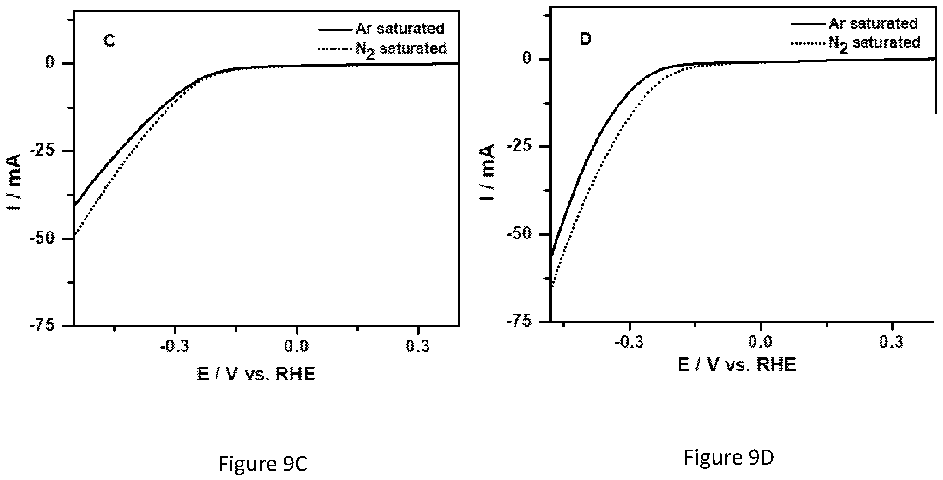

Linear sweep voltammograms (LSVs) of the nickel-foam working electrodes in a 1.0 M KOH-saturated solution are shown in Figure 9A. There was no obvious change in LSVs when bare nickel foam was used as a working electrode in either argon or nitrogen-saturated electrolytes. Therefore, nickel foam can be used as an excellent substrate, due to its high porosity and electrochemical inertness towards NRR in the potential window applied. Similarly, the $TiO_2/C$ electrode did not show any NRR in the presence of the $N_2$-saturated electrolyte, as shown in Figure 9B. However, the $Fe_2O_3$-coated nickel-foam electrode (loading: 15 mg cm$^{-2}$) in the nitrogen-saturated 1.0 M KOH solution exhibited an increase in the reduction current without any significant change in onset potential (-0.183 V vs. RHE), in contrast to the argon-saturated electrolyte. Nevertheless, the rate of ammonia formation on the $Fe_2O_3$-coated Ni-foam electrode was $2\times10^{-10}$ mol s$^{-1}$cm$^{-2}$ at an applied potential of -0.277 V vs. RHE. The onset potential of HER recorded in the argon-saturated solution on the $Fe_2O_3/TiO_2$ composite electrode was -0.2 V. That value is lower than the onset for NRR obtained from the LSV recorded under nitrogen saturation (from -0.2 V in Ar to -0.15 V in $N_2$); conditions showed a 0.05 V difference in onset potentials between these two processes when argon was replaced by nitrogen. Furthermore, a clear decrease of -0.027 V in the overpotential was seen between the voltammograms recorded using $Fe_2O_3/TiO_2/C$ and $Fe_2O_3/C$ in the nitrogen-saturated solution, showing the enhanced activity of the former one. These results confirmed that the synergistic effect of $Fe_2O_3/TiO_2$ composite plays an important role in enhancing the electrochemical ammonia reaction. In the catalyst employed in this work, the molar ratio between $Fe_2O_3$ and $TiO_2$ was 60% and 40%, respectively, as calculated from the starting amounts of iron(III) nitrate and titanium dioxide. The rate of ammonia formation was found to be almost one order of magnitude higher on the $TiO_2$-supported catalyst ($1.2\times10^{-9}$ mol s$^{-1}$cm$^{-2}$) compared to an unsupported iron-oxide catalyst ($2.0\times10^{-10}$ mol s$^{-1}$cm$^{-2}$) at an applied potential of -0.277 V vs. RHE. The rate further increased to $1.9\times10^{-9}$ mol s$^{-1}$cm$^{-2}$ with the same loading when 10 wt.% of Vulcan-XC carbon was added to improve the electron charge transfer process between the catalyst and the current collector. As mentioned earlier, a few research articles have already reported iron-based catalysts for NRR, but at elevated temperatures and pressures. The higher electrocatalytic activity of $Fe_2O_3/TiO_2$ for NRR cannot be explained solely by the activity of $Fe_2O_3$ alone. Therefore, it can be concluded that the presence of $TiO_2$ in the composite seems to have a significant effect on the catalysis. Indeed, the ammonia formation rate of -0.277 V obtained with the $Fe_2O_3/TiO_2$ composite was almost one order of magnitude higher, compared to $Fe_2O_3$ only. Both naturally occurring and synthetic forms of $TiO_2$ have a small oxygen deficiency; therefore, the exact formula of the titanium dioxide can be expressed as $TiO_{2-x}$ (x~0.01) in both anatase and rutile forms. This oxygen deficiency is due to the presence in both forms of a small amount of $Ti^{3+}$ impurity in the titania crystalline structure. For instance, Hirakawa et al. have used commercial anatase as a photocatalyst for ammonia synthesis from water and nitrogen at atmospheric pressure and room temperature. The photocatalytic activity of the $TiO_2$ was attributed to the $Ti^{3+}$ surface species serving as active sites for nitrogen reduction. Hence, it was assumed that the inherently present $Ti^{3+}$ species in $TiO_2$ facilitate the adsorption and reduction of nitrogen molecules via the electron donation and cleavage of N=N. This leads to the formation of the $Ti^{4+}$-azo complex; the $Ti^{3+}$ species are regenerated by the formation of ammonia during photocatalysis. Similar enhancement of ammonia formation was reported at the surface of some noble metals (Pt, Ru and Pd) loaded onto $TiO_2$ that were used as photocatalysts and contrasted favorably with their unsupported homologues. Titania alone does not have any electrocatalytic activity (Figure 9B), but when used as support for $Fe_2O_3$ it shows superior electrocatalytic performance. In the present work the inventors assumed that not only $Fe_2O_3$ but also $TiO_2$ (carrying the $Ti^{3+}$ species) surgically responsible for NRR.

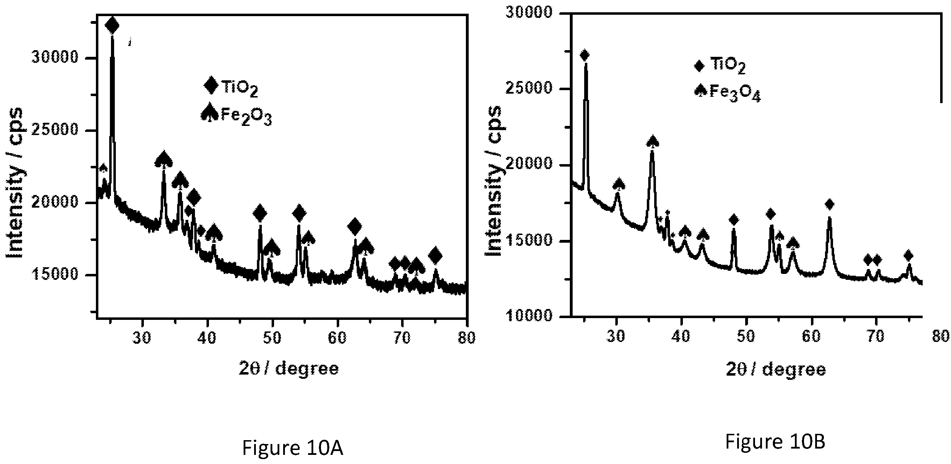

The proposed underlying mechanism for such experimental observation could be as follows: By polarizing a cathode to such negative electrode potentials, it can be expected that iron(III) oxide will be partially reduced to form magnetite ($FeO \cdot Fe_2O_3$). This has been experimentally proven by recording the XRD of a catalyst layer after the electrode was kept at -0.277 V vs. RHE (as shown in Figure 10A-B), during which time the characteristic $Fe_2O_3$ XRD pattern completely disappeared. This kind of electroreduction has already been reported for the electrochemical reduction of a $Fe_2O_3$ pallet in a two-electrode cell configuration operating at 1.61 V in 60% NaOH at 110 °C. The XRD of the obtained product clearly showed the existence of a magnetite phase along with excess $Fe_2O_3$ and elemental iron. The possible underlying mechanism for the synergic behavior between $Fe_2O_3$ and $TiO_2$ regarding the NRR could be understood as based on the interfacial intervalence charge transfer between $Ti^{4+}$ (from $TiO_2$) and the $Fe^{2+}$ species that are formed during the partial electroreduction of the iron (III) oxide catalyst. Such phenomena were reported earlier for various Fe-Ti containing minerals. This kind of electron exchange might result in regeneration of the $Fe_2O_3$ catalyst and the concomitant formation of $Ti^{3+}$ species that present additional active sites for NRR, as mentioned before.

*The effects of applied electrode potential and temperature*

The effects of applied electrode potentials and temperature on the rate of ammonia formation at a $Fe_2O_3/TiO_2$ composite modified electrode were studied by chronoamperometry in alkaline electrolyte. At an applied potential nitrogen was reduced to ammonia at the cathode, in an overall process described in Reaction (5), while the oxygen evolution occurred on the surface of the counter electrode (Reaction (6)). The obtained ammonia was partially dissolved in alkaline electrolyte while the remaining amount was introduced into the acid trap by the gas carrier (i.e. the unreacted nitrogen stream).

$$\text{Cathode: } 2N_2 + 12H_2O + 12e^- \rightarrow 4NH_3 + 12OH^- \qquad (5)$$

$$\text{Anode: } 12OH^- \rightarrow 3O_2 + 6H_2O + 12e^- \qquad (6)$$

$$\text{Overall: } 2N_2 + 6H_2O \rightarrow 4NH_3 + 3O_2 \qquad (7)$$

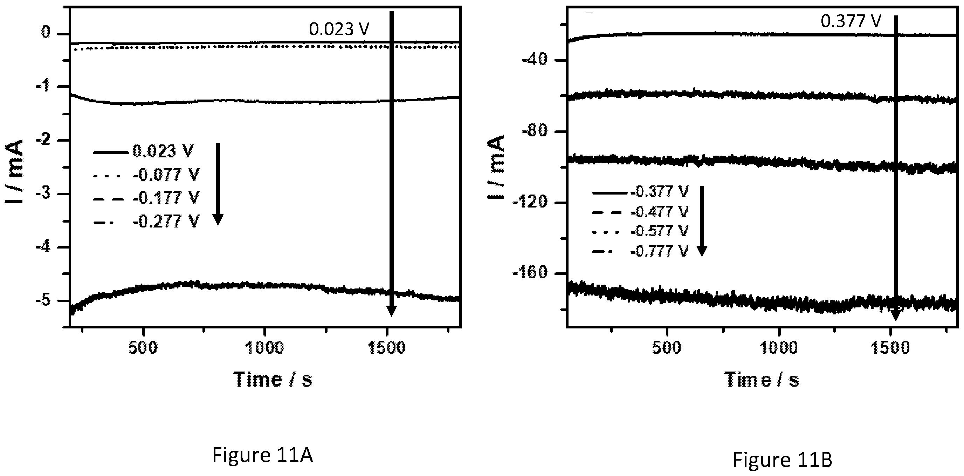

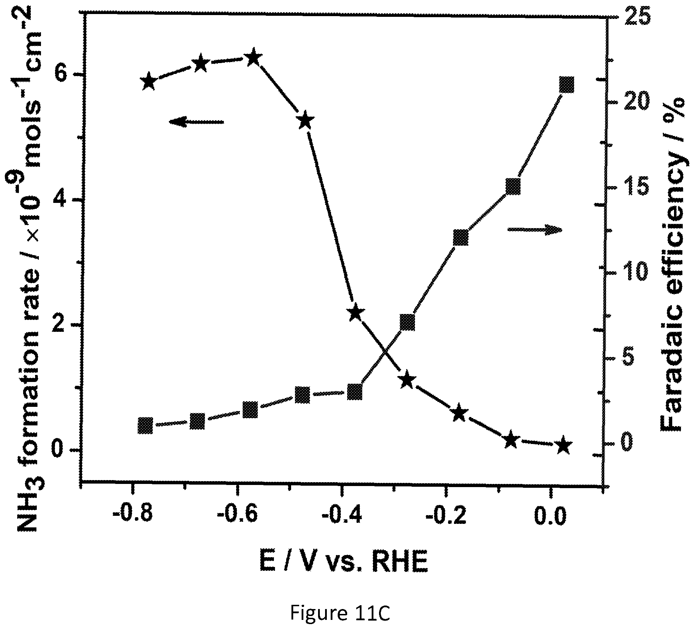

Figures 11A and 11B depict the influence of selected applied potentials on NRR at the $Fe_2O_3/TiO_2$ catalysts. The various ammonia electrochemical formation rates and their corresponding faradaic efficiencies are given in Figure 11C and summarized in Table 3.

Table 3. Effect of applied potential on electrochemical ammonia synthesis

| *Applied Potential (mV vs. RHE)* | Quantification of ammonia using Nessler's reagent (mol s$^{-1}$cm$^{-2}$) | Ammonia formation Theoretical * (mg) | Ammonia formation Experimental** (mg) | Efficien cy (%)*** |
|---|---|---|---|---|
| *23* | $1.5 \times 10^{-10}$ | 0.041 | 0.009 | 21 |
| *-77* | $2.3 \times 10^{-10}$ | 0.082 | 0.013 | 15 |
| *-177* | $6.5 \times 10^{-10}$ | 0.31 | 0.039 | 12 |
| *-277* | $1.9 \times 10^{-9}$ | 1.45 | 0.11 | 7 |
| *-377* | $2.4 \times 10^{-9}$ | 5.2 | 0.14 | 2.7 |
| *-477* | $5.3 \times 10^{-9}$ | 10.8 | 0.32 | 2.9 |
| *-577* | $6.3 \times 10^{-9}$ | 20.3 | 0.38 | 1.8 |
| *-677* | $6.2 \times 10^{-9}$ | 33.2 | 0.37 | 1.1 |
| *-777* | $5.9 \times 10^{-9}$ | 46.8 | 0.36 | 0.8 |
| * Calculated using Equation SE2. ** Calculated based on experimental results (Equation 4). *** Calculated based on experimental results by using Equation SE2. | | | | |

A maximum faradaic efficiency of 21% was observed at a low applied potential of 0.023 V with a slow ammonia formation rate of $1.5 \times 10^{-10}$ mol s$^{-1}$cm$^{-2}$. The maximum rate of ammonia formation of $6.3 \times 10^{-9}$ mol s$^{-1}$cm$^{-2}$ was attained at a high applied potential of -0.577 V with a faradaic efficiency of 1.8%. As applied potential increased from -0.577 V to -0.777 V, both the rate of ammonia formation and faradaic efficiency declined and finally reached a value of $5.9 \times 10^{-9}$ mol s$^{-1}$cm$^{-2}$ and 0.8%, respectively. This illustrates the competition between NRR and HER predominantly at high potentials, giving rise to low faradaic efficiencies observed at potentials below -0.377 V. The obtained results are comparable with both iron-based (nano-$Fe_2O_3$, $\gamma$-$Fe_2O_3$, nano-$Fe_3O_4$, and $CoFe_2O_4$) and non-iron-based catalysts (Ru/Cs$^+$/MgO and $BaCe_{0.9}Y_{0.1}O_{3-\delta}$), which were reported earlier for the systems that operate at relatively high temperatures (as shown in Table 1).

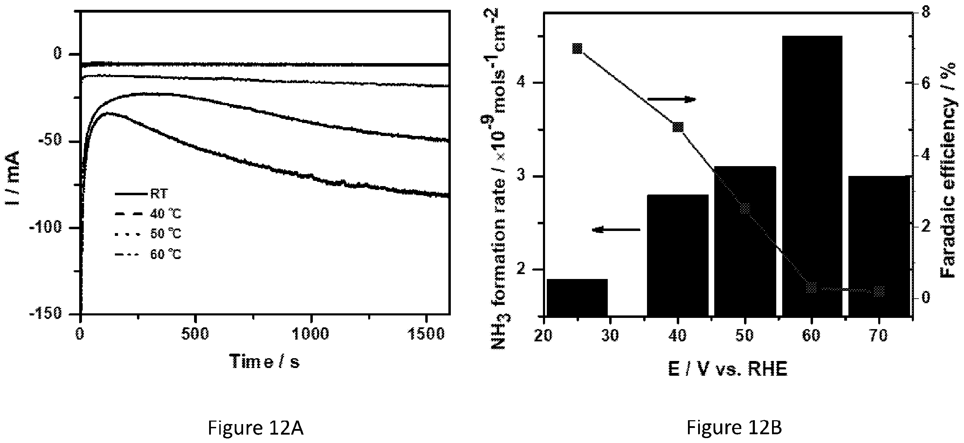

The effect of temperature on the rate of NRR was studied by varying temperature from 25 to 60 °C at a potential of -0.277 V, as shown in Figure 12A. It can be seen that the electrochemical ammonia formation rate increased with increasing reaction temperatures up to 60 °C. As temperature was increased, the heterogeneous rate constant for NRR increased simultaneously, and as a result the rate of ammonia formation was increased, with a concomitant decrease in the faradaic efficiency due to the dominant HER above 60 °C.

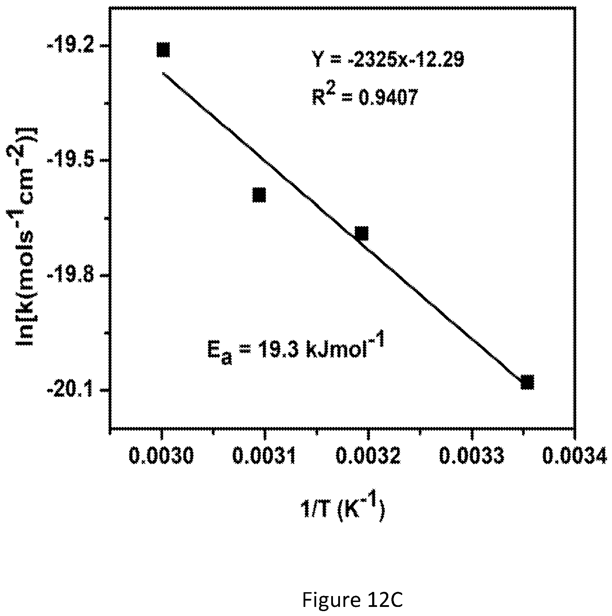

Temperatures above 60 °C might have a stronger impact on HER than NRR. Hence, at temperatures above 70 °C the competing hydrogen evolution starts to dominate the overall electrochemical process. The variations in ammonia formation rate and faradaic efficiency at various temperatures are given in Figure 12B and summarized in Table 4. By using an Arrhenius plot and fitting the *In*(rate) versus 1/T (Figure 12C), the activation energy for nitrogen reduction was found to be 19.3 kJ mol$^{-1}$ (based on Equation SE1).

**Table 4.** Effect of temperature on electrochemical ammonia synthesis.

| Temp (°C) | Quantification of ammonia using Nessler's reagent (mol s$^{-1}$cm$^{-2}$) | Ammonia formation Theoretical mg | Ammonia formation Experimental mg | Efficiency % |
|---|---|---|---|---|
| 25 | $1.9 \times 10^{-9}$ | 1.04 mg | 0.072 mg | 7 |
| 40 | $2.8 \times 10^{-9}$ | 3.64 mg | 0.175 mg | 4.8 |
| 50 | $3.1 \times 10^{-9}$ | 7.69 mg | 0.190 mg | 2.5 |
| 60 | $4.5 \times 10^{-9}$ | 15.6 mg | 0.275 mg | 0.3 |
| 70 | $3 \times 10^{-9}$ | 13.9 mg | 0.183 mg | 0.2 |

Calculation of Activation energy (Ea) based on experimentally determined ammonia rate of formation:

$$k = Ae\frac{-E_a}{RT} \quad Arrhenius\ equation$$

$$ln\ k = \frac{-E_a}{RT} + \ln A$$

$$slope = \frac{-E_a}{R}$$

$$E_a = 2325.43 \times 8.314$$

$$E_a = 19.3\ kJmol^{-1}$$

where: A - constant; R - Universal gas constant (8.314 Jmol$^{-1}$K$^{-1}$); T - temperature (K); k - reaction rate.
SE2. Calculation of the theoretical ammonia formation based on Faraday's law:

$$m = \frac{M * I * t}{z * F}$$

Where: m- mass (g); M - Molar weight (g mol$^{-1}$); I- current (A); t- time (s); z- number of electrons (3); F- faraday constant (96486 C mol$^{-1}$)
SE3. Calculation of faradaic efficiency:

$$FE(\%) = \frac{NH_3\ experimentaly\ found}{NH_3\ theoritical\ value} \times 100$$

*Electrochemical ammonia synthesis from air*

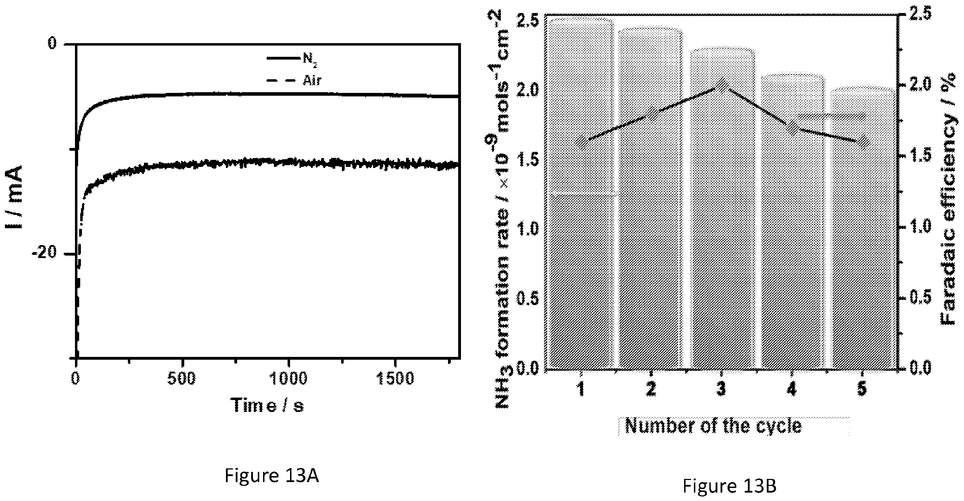

The air contains around 78% v/v nitrogen; thus, it presents an attractive source of molecular nitrogen that can be used for ammonia electrosynthesis. Figure 13A shows chronoamperometric curves of the $Fe_2O_3/TiO_2/C$ composite

painted on nickel-foam electrodes in 1.0 M KOH solutions saturated with nitrogen and air at a potential of -0.277 V. Using air-saturated electrolyte yielded a rate of $1.7\times10^{-9}$ mol $s^{-1}cm^{-2}$, a value comparable to the ammonia formation rate determined in nitrogen-saturated electrolyte (i.e. $1.9\times10^{-9}$ mol $s^{-1}cm^{-2}$ at -0.277 V). This proves the hypothesis that air can be used as an excellent substitute for pure nitrogen, regardless of the presence of other gases such as oxygen. Similarly, the faradaic efficiencies in nitrogen and air were found to be 7% and 3%, respectively. The obtained ammonia formation rate ($1.9\times10^{-9}$ mol $s^{-1}cm^{-2}$) was very close to the rate of ammonia formation using pure nitrogen. However, high reduction current density (-11.14 mA $cm^{-2}$) was observed in the air-saturated solution, which was attributed to the contribution of oxygen reduction reaction that occurred simultaneously with NRR on an iron-based catalyst.

## Stability study

To evaluate the stability of $Fe_2O_3/TiO_2/C$ composites on nickel-foam electrodes, repetitive potential-controlled NRR measurements were carried out with a time interval (cycles) of 30 minutes. Each experiment was conducted with the same electrode as the rate of ammonia formation was measured (shown in Figure 13B). These cycles were applied to refresh the solutions of the electrolyte and the acid trap after the extraction of aliquots used for the analysis, in order to make sure that the amount of sulfuric acid in the trap was not completely neutralized by the ammonia stream but retained its trapping capacity. After each cycle, the working electrode was rinsed with water, dried, and fresh alkaline electrolyte was used to perform the subsequent NRR cycles. After five consecutive measurements, faradaic efficiency and rate of ammonia formation were found to be 2% and $2\times10^{-9}$ mol $s^{-1}cm^{-2}$, respectively. This shows that the ammonia production rate on this electrode remained stable over a period of 5 hours.

## On-line direct electrochemical mass spectrometric measurement of evolved gases at the $Fe_2O_3/TiO_2/C$ electrode

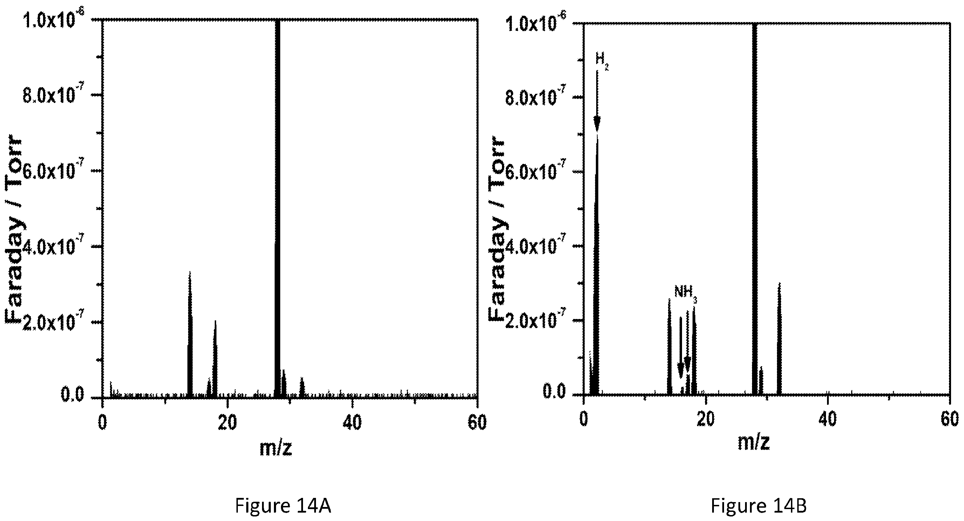

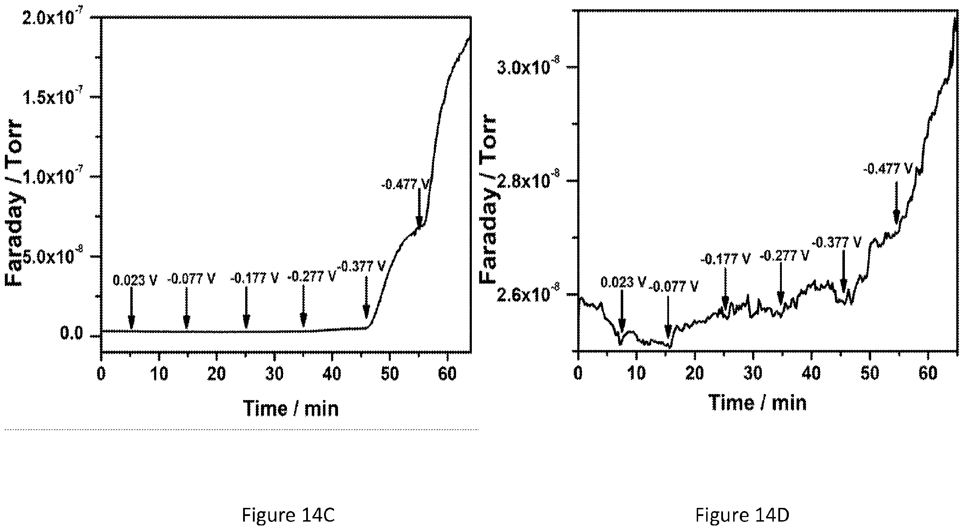

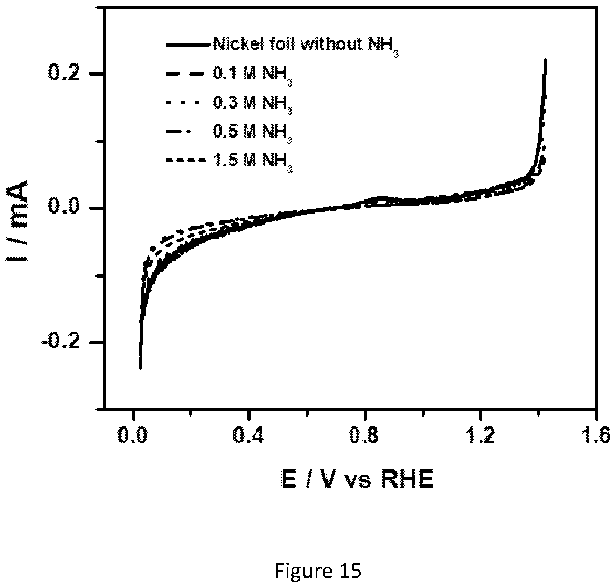

It is very important to know the chemical composition of the gas products evolved during the NRR. Figs. 14A-B present the mass spectra of the outlet gas mixture, before and after the selected electrode potential (-0.477 V vs. RHE) was applied. At this applied potential, three gases were detected in a large window of mass-to-charge ratios (m/z), i.e. the m/z values of 2, 17 and 32 (corresponding to hydrogen, ammonia and oxygen, respectively). The simultaneous ammonia electro-oxidation that might take place on the counter electrode was ruled out, since no peaks that correspond to either NO or $NO_2$ (m/z=30) were found in the spectrum at this applied potential. These oxides could have been formed on the anodic electrode as a side-product in the oxidation of ammonia and water to $N_2$ and $O_2$, respectively. The inventors attributed this to the relatively high overpotential of ammonia oxidation on Ni foil (as seen in Figure 15).

The highest faradaic efficiency of 21% was found at a potential of 0.023 V with a very low ammonia formation rate (Figure 11A-C). The rate increased with the increasing value of electrode potential. At -0.477 V, the ammonia formation rate was significantly lower, with the HER being the most favorable process. Conversely, lower applied potentials gave the highest rate for NRR at the expense of a very low faradaic efficiency. Therefore, -0.477 V was selected for on-line DEMS studies, as shown in Figure 15C; Figure 15D shows the simultaneous measurements of hydrogen (m/z=2) and ammonia (m/z=17).

$Fe_2O_3/TiO_2/C$ was used as a catalyst for electrochemical synthesis of ammonia, using water and nitrogen at ambient pressure and room temperature. The chronoamperometric and linear sweep voltammetric experiments on the $Fe_2O_3/TiO_2/C$ clearly confirmed that $Fe_2O_3$ together with $TiO_2$ shows better nitrogen reduction reaction activity than $Fe_2O_3$ alone. The high rate of ammonia formation was due to the synergistic effect of iron oxide/$TiO_2$. Applied temperatures and electrode potentials showed a significant impact on the rate of ammonia formation. The present catalyst showed remarkable activity and good stability for NRR, even when air was used as the nitrogen source.

## EXAMPLE 4

### Synthesis of $Fe_2O_3/TiO_2/C$

$Fe_2O_3/TiO_2/C$ ink was prepared by mixing the catalyst, Vulcan XC-72 carbon and Nafion® (84, 8 and 8 wt.%, respectively) in a glass vial, with water and isopropyl alcohol (1:1 v/v) added to the mixture. This slurry was stirred overnight on a magnetic stirrer, brush-coated onto nickel foam and dried at 90 °C for 2 h in an air-convection oven.

### Synthesis of $Ru@Fe/Fe_2O_3$

In MeOH-$H_2O$ (60 mL/140 mL), a solution of iron(II) sulfateheptahydrate (99%) (4.5 g in 200 mL $H_2O$) was reduced with aqueous $NaBH_4$ (0.8 g in 20 mL $H_2O$ added at a rate of approximately 2 mL per minute). The resulting $Fe/Fe_2O_3$ were then washed three times with 10 mL of methanol, using a magnet to immobilize the particles. Afterward, a $RuCl_3$ solution was prepared (10 mg of $RuCl_3$ in 10 mL of methanol) and added dropwise to the sonicating solution of iron nanoparticles (100 mg in 10 mL). The resulting mixture was left to sonicate for 30 min. The supernatant was magnetically decanted, and the resulting Ru@Fe/Fe$_2$O$_3$ were rinsed three times with methanol (10 mL) and dried prior to use.

### RuPt-Ti

The equal amount of RuPt alloy and Titanium nanopowder were taken in mortar, ground well and obtained composition reduced at hydrogen argon mixture (20:80) at 350 °C for three hours.

### Ru/TiO$_2$-Ti$_2$O$_3$

RuCl$_3$ and urea mixed well in the ratio 1:2 and transferred into Swagelok cell. To this mixture 1 equivalent weight of titanium isopropoxide added and the closed tightly heated at 500 °C for three hours. After reaction completion, cooled to room temperature and product taken out from the Swagelok cell.

### CFeMoBi

0.1 M BiCl$_3$, 0.03 M Na$_2$MoO$_4$ and 0.03 M FeCl$_3$ dissolved in 22 ml Milli-Q water. To this mixture 0.3 g of black pearl carbon added. Finally 7.5 ml of ethylene glycol and 40 ml of ethanol added stirred for 20 min. The solution evaporated and obtained crude mass heated at 900 °C for 3 hr under nitrogen atmosphere.

### Fe-Mo-P

The mixture of FeSO$_4$, Na$_2$MoO$_4$ and NaH$_2$PO$_2$ (1:1:1 eq. wt.) ground very well in mortar. The mixture transferred into Swagelok cell heated at 500 °C for four hours. After reaction completion, cooled to room temperature and product taken out from the Swagelok cell.

### EXAMPLE 5

**Determination of ammonia formed during nitrogen reduction reaction (NRR)**

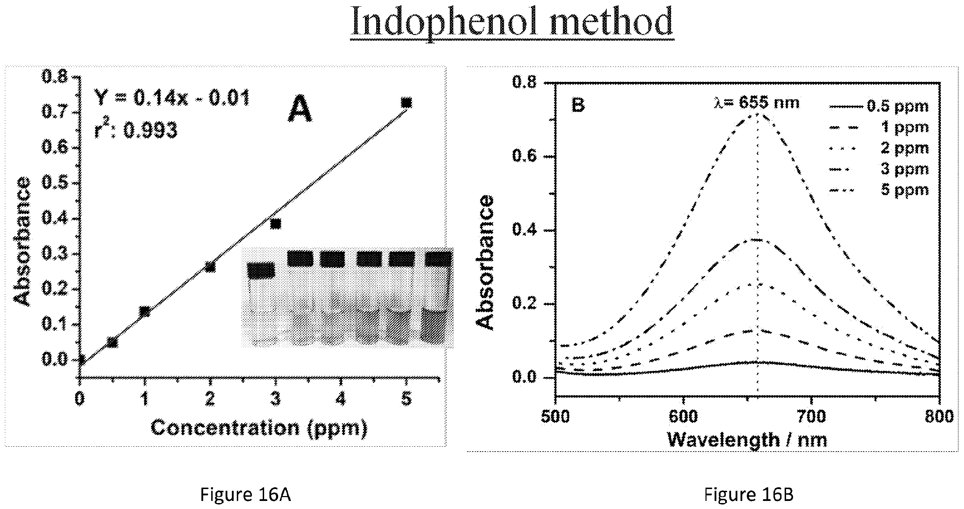

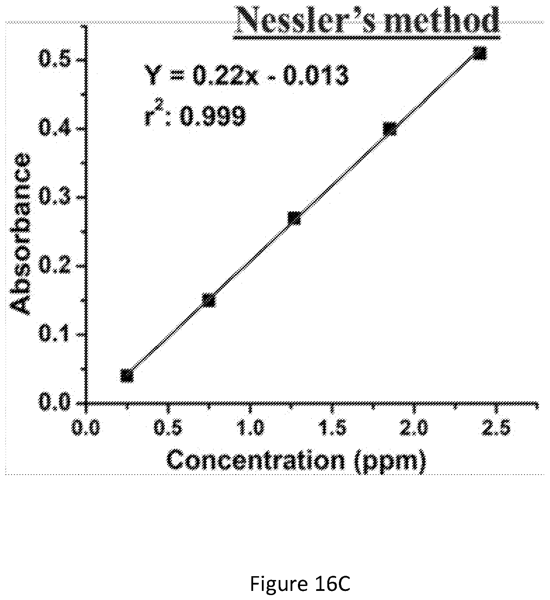

Ammonia generated during electrochemical nitrogen reduction reaction determined by using two well-known methods, namely Nessler's reagent method and indophenol chemical method (Figure 16A-C). The Nessler's reagent method is very simple and fast way to detect/determine the presence of ammonia. It is ready to use reagent (0.09 mol/L solution of potassium tetraiodomercurate(II) (K$_2$[HgI$_4$]) in 2.5 mol/L potassium hydroxide) prepared from aqueous solution of mercuric iodide and potassium iodide. This reagent reacts with ammonia and gives yellow color due to formation of iodide of Millon's base as shown in below reaction.

$$NH_4^+ + 2\ [HgI_4]^{2-} + 4\ OH^- \rightarrow HgO \cdot Hg(NH_2)I\ (\text{iodide of Millon's base}) + 7\ I^- + 3\ H_2O$$

In Indophenol chemical method, ammonia reacts in moderately alkaline solution with hypochlorite to give monochloramine which, in the presence of phenol, catalytic amounts of nitroprusside ions and excess of hypochlorite gives indophenol blue as shown in reaction below. Since it is chemical reaction, minimum 2 h needed for the completion before quantification of ammonia using UV-Vis spectroscopy.

### EXAMPLE 6

**Ru$_x$Sn$_y$ bimetallic nanoparticles on carbon support for nitrogen reduction reaction to ammonia**

*Synthesis of Ru$_x$Sn$_y$ alloy catalyst*

Solvothermal procedure has been used for the synthesis of Ru$_x$Sn$_y$ particles supported on high active surface area carbon support. The calculated amount of ruthenium (III) chloride hydrate (Ru content: 42.28 wt%) and tin(II) chloride has been mixed with the 63 mg of Vulcan Carbon support® and an excessive amount of the reducing agent (i.e. ethylene-glycol). The soobtained mixture was sonicated for 20 min. and vigorously stirred for 3h in order to homogenize the system. To that mixture, 9 ml of absolute ethanol is added, and argon was purged for 20 minutes to displace the dissolved oxygen. The argon saturated solution is transferred into a Teflon lined autoclave heated up to 200 °C for 9.5h. Once the mixture is cooled to room temperature, the ethylene glycol was separated by centrifugation and the crude solid product is washed 5 times with absolute ethanol. Following the washing cycles, the $Ru_xSn_y/C$ samples were dried in the vacuum oven at 60 °C for 1h with an additional drying cycle at 80 °C and atmospheric pressure. Ru/C is synthesized in the same way as $Ru_xSn_y/C$ while the Sn/C required additional reduction step in hydrogen-argon atmosphere (20%-80% v/v) at 400 °C for 2h to reduce the formed $SnO_2/C$ nanoparticles into its metallic Sn form.

*Results*

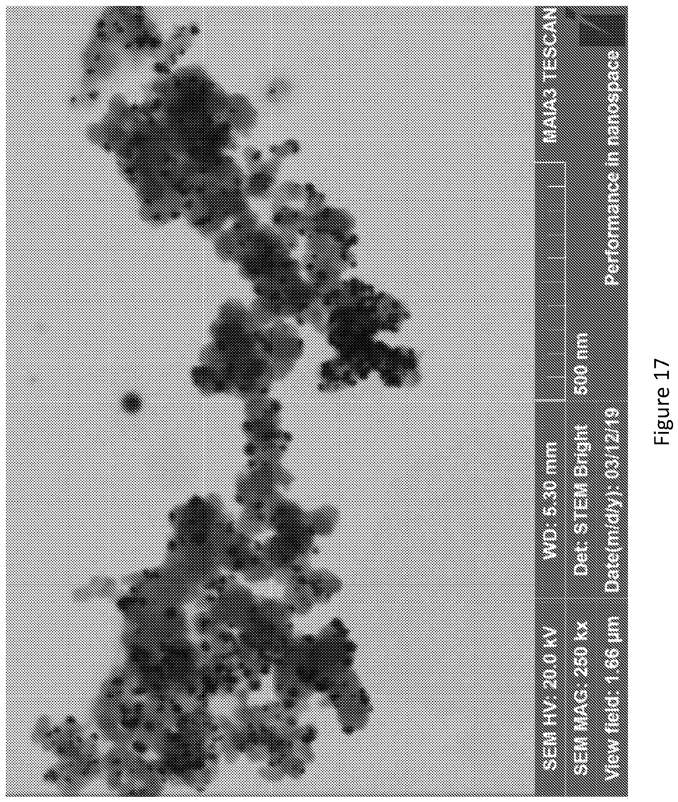

The morphology of nanoparticles and their average size have been determined by STEM imaging on the copper grid. Figure 17 presents the STEM images of RuSn/C samples. The image shows spherical RuSn nanoparticles, with a size distribution ranging from 3-15 nm, are attached to the surface of the carbon support used in the synthesis of the catalyst.

Linear Sweep Voltammetry (LSV)and chronoamperometry have been used to examine the electrocatalytic properties of $Ru_xSn_y$ catalyst.

*Choice N#1 (rate expressed as mol s$^{-1}$mg$^{-2}$)*

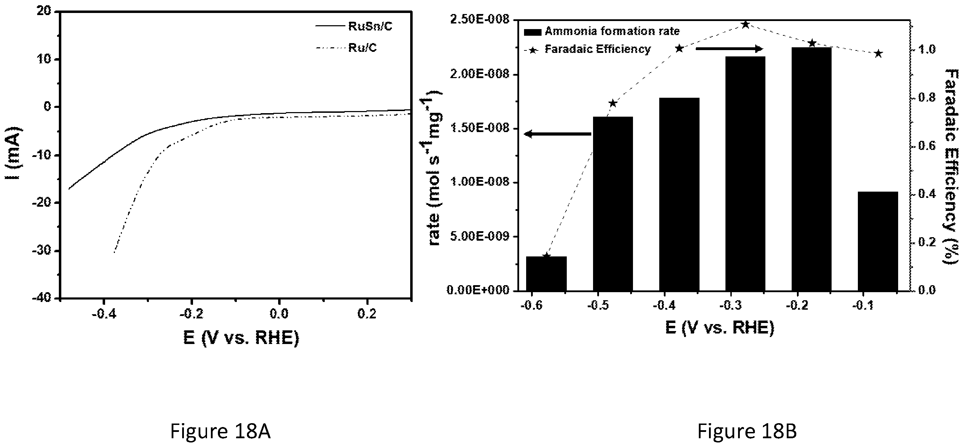

Figure 18A presents the LSV of the Ru/C and RuSn/C (50% each metal) recorded in nitrogen saturated 0.1M $Na_2SO_4$. The significant shift in an HER (and concomitant NRR) overpotential of ca. 100 mV has been noticed as expected for the alloys that contain the HER "resistant" elements such as Sn. Although the total catalyst loading, i.e. RuSn/C along with Nafion binder, in both cases was similar (2.2 mg for RuSn/C and 2.4 mg for Ru/C), significant decrease in current can be noticed. This can be ascribed to impeded HER on this type of catalysts.

Ammonia formation rates and Faradaic efficiencies are calculated from chronoamperometric curves, recorded in a nitrogen saturated atmosphere and a constant potential during the period of 2h. The optimal rate optimization and corresponding Faradaic efficiencies are shown in Figure 18B. The highest ammonia formation rate of $2.25 \times 10^{-8}$ mol s$^{-1}$mg$^{-1}$ was achieved at -200 mV (vs RHE) with Faradaic efficiency of ca. 1%. In figure 2A, the appearance of HER (appears negative currents) are delayed by 100 - 200 mV, allowing in RuSn at higher efficiency.

*Choice N#2 (rate expressed as mol s$^{-1}$cm$^{-2}$)*

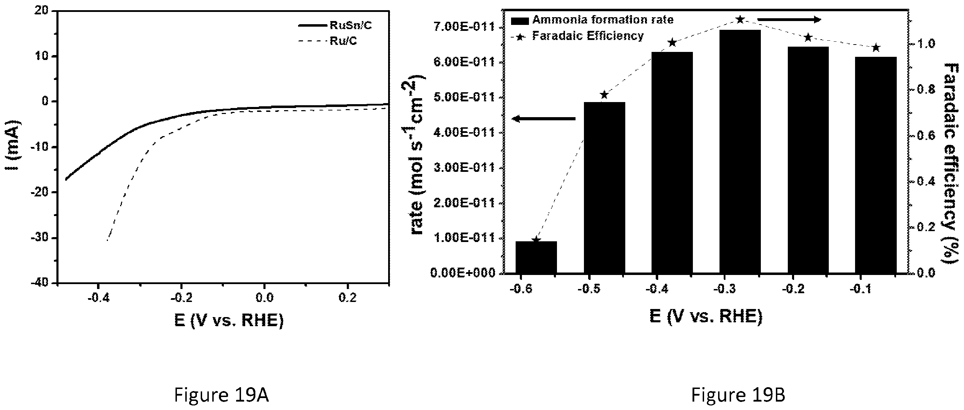

**Figure 19A** presents the LSV of the Ru/C and RuSn/C (50% each metal) recorded in nitrogen saturated 0.1M $Na_2SO_4$. The significant shift in an HER (and concomitant NRR) overpotential of ca. 100 mV has been noticed as expected for the alloys that contain the HER "resistant" elements such as Sn. Although the total catalyst loading, i.e. RuSn/C along with Nafion binder, in both cases was similar (2.2 mg for RuSn/C and 2.4 mg for Ru/C), significant decrease in current can be noticed. This can be ascribed to impeded HER on this type of catalysts.

The optimal rate optimization and corresponding Faradaic efficiencies are shown in Figure 19B. The highest ammonia formation rate of $6.93 \times 10^{-11}$ mol s$^{-1}$mg$^{-1}$ was achieved at - 200 mV (vs RHE) with Faradaic efficiency of ca. 1.1 %.

**EXAMPLE 7**

**Catalyst development generation 1**

The various commercially available/synthesized catalysts were tested for electrochemical ammonia synthesis. The obtained results are tabulated in Table 5. Among all the catalysts tested, as prepared $Fe_2O_3/TiO_2$ via simple precipitation followed by hydrothermal method showed better ammonia production.

**Table 5**

| Catalyst composition | Temperature in cell/ °C | Rate of ammonia production, mol s$^{-1}$cm$^{-2}$ |
|---|---|---|
| Ru @ Fe/Fe$_2$O$_3$[†] | 50 | $2 \times 10^{-10}$ |
| Titanium powder[‡] | 50 | $2 \times 10^{-10}$ |
| Titanium nanoparticles[‡] | 50 | $4.5 \times 10^{-11}$ |
| Titanium hydride[‡] | 50 | $6 \times 10^{-11}$ |
| CFeMOBi[†] | 50 | $3.5 \times 10^{-11}$ |
| RuPt[‡] | 50 | $3.5 \times 10^{-10}$ |

(continued)

| Catalyst composition | Temperature in cell/ °C | Rate of ammonia production, mol s$^{-1}$cm$^{-2}$ |
|---|---|---|
| RuPt-TiPowder$^\dagger$ | 50 | $2.2 \times 10^{-10}$ |
| Ti-Phthalocyanine $^\ddagger$ | 50 | $0.5 \times 10^{-10}$ |
| Fe-Mo-P$^\dagger$ | 50 | Not active catalyst for ammonia production |
| Commercial Pt $^\ddagger$ | 50 | Not active catalyst for ammonia production |
| Commercial Pd $^\ddagger$ | 50 | Not active catalyst for ammonia production |
| Commercial Ru $^\ddagger$ | 50 | $1.0 \times 10^{-11}$ |
| RuPt $^\ddagger$ | RT | $8.1 \times 10^{-11}$ |
| RuPt/C $^\ddagger$ | 50 | $(5 \pm 1) \times 10^{-10}$ |
| Ru/TiO$_2$-Ti$_2$O$_3$$^\dagger$ | 50 | $(9.3 \pm 1) \times 10^{-10}$ |
| **Fe$_2$O$_3$/TiO$_2$/C*$^\dagger$** | **50** | **$(1 \pm 0.5) \times 1^{-8}$**$^{**}$ |
| $\dagger$ Synthesized catalyst, $\ddagger$ commercially available catalyst |||
| ** attained using -100 mg cm$^{-2}$ of this low-cost material |||

The best catalyst for electrochemical ammonia synthesis is the synthesized Fe$_2$O$_3$/TiO$_2$/C. The rate of ammonia produced with this catalyst is ~17$\times 10^{-8}$ g/cm$^2$s = $1 \times 10^{-8}$ mol s$^{-1}$cm$^{-2}$ with columbic efficiency $5 \pm 1$%.

It is important to note that the Fe$_2$O$_3$/TiO$_2$/C is a very low cost material, the synthesis method requires soft conditions of temperature and pressure and can be easily upscaled.

The rate of ammonia formation depends on the temperature and strength of KOH. The cell temperature up to 50 °C and 5.0 M KOH (as an electrolyte) leads higher yield of ammonia. For instance, at room temperature rate of ammonia formed in the order of $(4 \pm 1) \times 10^{-9}$ on the other hand at 50 °C rate of ammonia formation has been increased up to $(1 \pm 0.5) \times 10^{-8}$ mol s$^{-1}$cm$^{-2}$.

**EXAMPLE 8**

**Electrochemical ammonia generator prototypes**

Three types of electrochemical ammonia generators were fabricated and tested. The fabrication and testing protocols are given below.

*Generator 1 prototype*

Fuel cell configuration consisting of two electrodes electrochemical generator. Membrane electrode assembly (MEA) is designed to work in a fuel cell configuration. The MEA has been prepared by sandwiching cathode electrode (catalyst coated Toray carbon 4 cm$^{-2}$) and anode (Pt/C coated Toray carbon 4 cm$^{-2}$) and alkaline membrane (quaternary ammonium polysulfone, 40 $\mu$m thickness) between them. On cathode side, high purity nitrogen (99.999) has been introduced and on the other anode side 1.0 M KOH has been continuously circulated (5 ml/min.) by using peristaltic pump. Above mentioned procedure is followed to determine the quantity of ammonia produced during the electrochemical reaction.

*Fuel cell configuration*

*Operation of prototype 1*

In this prototype, the nitrogen reduction reaction catalyst and electrolyte oxidizing catalyst were used as cathode and anode respectively. Anionic membrane sandwiched between anode and cathode. The known quantity of humidified nitrogen was passed through gas diffusion layer coated with catalyst and 1.0 M KOH electrolyte continuously circulated to the anode by using peristaltic pump. At an applied potential, nitrogen gas reduced to ammonia at cathode (as shown in equation 4) and was trapped in 10 mM H$_2$SO$_4$ for the quantification. On the other hand, at anode electrolyte oxidized to oxygen as shown in equation 5. The overall net reaction is given below.

$$Cathode:\ N_2+6H_2O+6e^-\rightarrow 2NH_3+6OH^-\qquad(4)$$

$$Anode:\ 6OH^-+6H+\rightarrow 3H_2O+1.5O_2\qquad(5)$$

$$Net\ reaction:\ N_2+6H^++6e^-\rightarrow 2NH_3+1.5O_2\qquad(6)$$

### *Current produced under static and dynamic potential control*

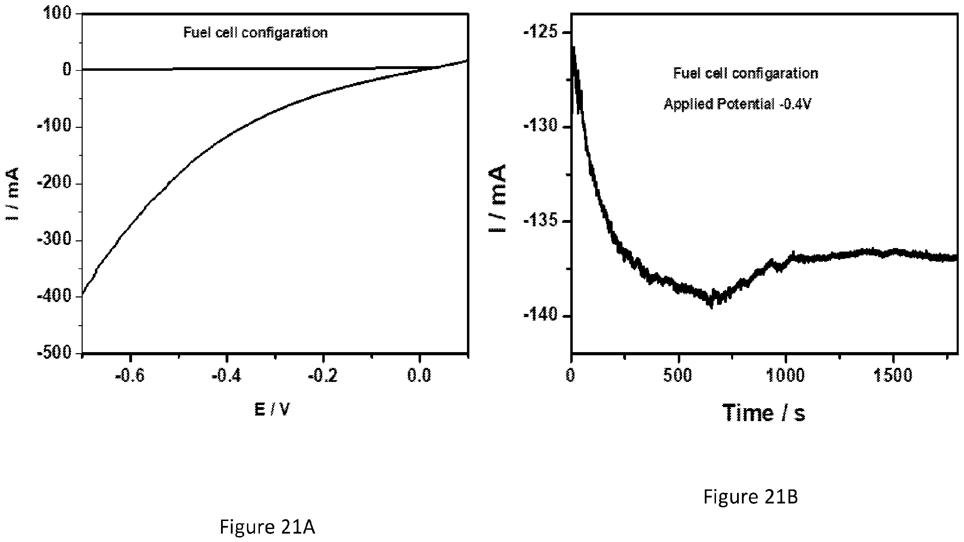

Linear sweep voltammogram (LSV) of nickel foil anode-alkaline membrane-$Fe_2O_3$/$TiO_2$ composite -cathode fuel cell type prototype configuration under nitrogen gas atmosphere is depicts in Figure 21A. This configuration produces very high currents, due to the low ohmic resistance of the electrolyte membrane/separator.

The obtained results are given table 6.

**Table 6.** Electrochemical ammonia synthesis in fuel cell configuration at various applied potentials.

| Sl. no. | Applied voltage / V | Ammonia formation / mol $s^{-1}cm^{-2}$ |
|---|---|---|
| 1 | -0.4 | $7 \times 10^{-10}$ |
| 2 | -1.3 | $8.2 \times 10^{-10}$ |
| 3 | -1.5 | $1.6 \times 10^{-10}$ |
| 4 | -1.7 | $3.2 \times 10^{-10}$ |

Due to unavailability of robust, durable and stable alkaline exchange membrane, electrochemical ammonia synthesis by fuel cell configuration has discontinued.

### *Bottle cell configuration -Prototype 2*

In this configuration, membrane is not used for separation of anode and cathode parts of cell. The cell consists of detachable plastic vessel and rubber cork. Cathode part of cell is the vessel (bottle or glass) that include:

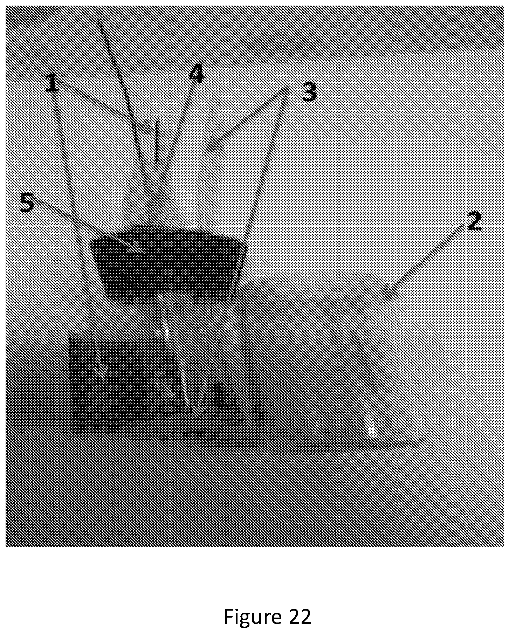

The working electrode (1 on Fig.22) that can be a free form and that placed in vessel. The nitrogen gas is purged nearby working electrode (3 on Fig.22) by silicon tubing with holes for nitrogen bubbling and immersed in electrolyte; the produced ammonia gas at the working electrode come out in silicon tubing and trapped in diluted acid.

Anode part of cell is plastic tube that fit in vessel and include anode (Ni foil).

Connection between cathode and anode parts of cell carried out by electrolyte in bottom part.

### *Results*

The electrochemical experiments carried out for electrochemical ammonia synthesis using $Fe_2O_3$/$TiO_2$/C catalyst in bottle cell configuration at room temperature and 50 °C using a 4.9 cm2 size electrode. Ammonia formation rate determined by chronoamperograms of $Fe_2TiO_3$/$TiO_2$/C electrodes at an applied potential of -1.8 V at room temparature and 50 °C the results is tabulated in table 7.

**Table 7.** The electrochemical ammonia formation at $Fe_2TiO_3/TiO_2/C$ electrodes at RT and 50 °C.

| No. | Time / min. | Potential applied / V | Current observed in CA experiment / mA/cm$^2$ | Quantification of ammonia using Indophenol / mol s$^{-1}$cm$^{-2}$ (acid trap and alkaline solution) | Ammonia formation (Theoretical) | Ammonia formation (Experimental) (Based on Indophenol method) | Efficiency of ammonia produced / % |
|---|---|---|---|---|---|---|---|
| 1 | 60 | -1.8 | 50 (6.5 cm$^2$) | $5.4 \times 10^{-9}$ | 10.4 mg | 0.330 mg | 3.2 |
| 2 | 30 | | 75 (6.5 cm$^2$) | $5.9 \times 10^{-9}$ | 15.6 mg | 0.361 mg | 2.4 |
| 3 | 30 (50 °C) | | 60 (4.9 cm$^2$) | $1.05 \times 10^{-8}$ | 12.48 mg | 0.642 mg | 5.1 |
| 4 | 30 (50 °C) | | 75 (4.9 cm$^2$) | $1.1 \times 10^{-8}$ | 15.6 mg | 0.673 mg | 4.3 |

The rate of electrochemical nitrogen reduction reaction of $Fe_2TiO_3/TiO_2/C$ (4.9 cm$^2$) electrodes at 50 °C in two electrode system were found to be **$1.05 \times 10^{-8}$ and $1.1 \times 10^{-8}$** mol s$^{-1}$cm$^{-2}$ with faradaic efficiencies 5.1 and 4.3.

***Electrochemical cell without membrane- Prototype 3***

***Working procedure***

In this setup nitrogen gas purged through cathode (which is mounted on porous frit covered with Teflon layer to avoid leakage of electrolyte), anode is dipped in electrolyte and separated from cathode without any membrane as shown in Figure 23.

Ammonia dissolves in aqueous solution (~28 wt%), keeping this point in mind above electrochemical cell has been developed which can work with minimal quantity of electrolyte. As a result electrochemically generated ammonia saturates quickly in electrolyte and comes out from the cell and collects in acid trap. On the other hand, nitrogen is passing through the catalyst coated carbon felt; as a result most of the active sites are utilized for the electrochemical nitrogen reduction reaction.

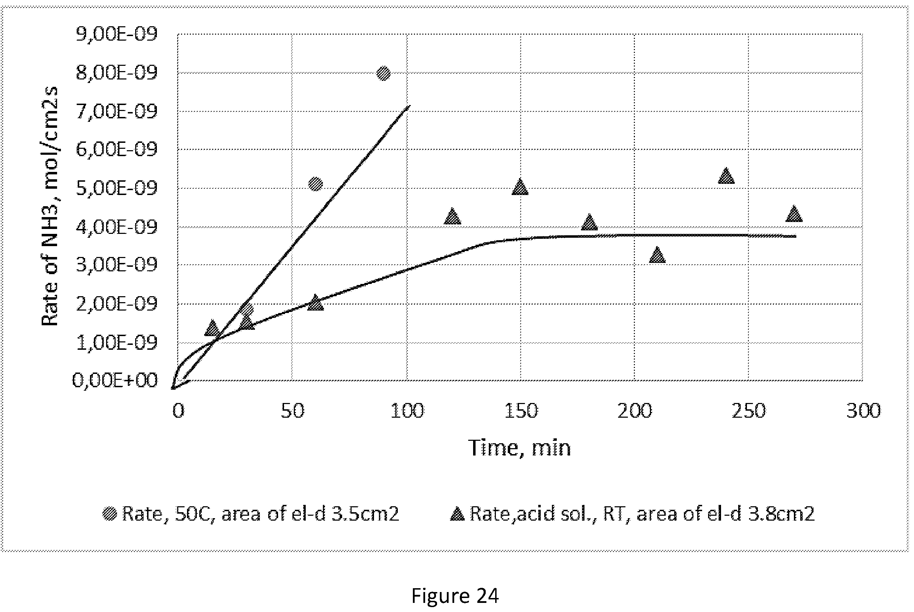

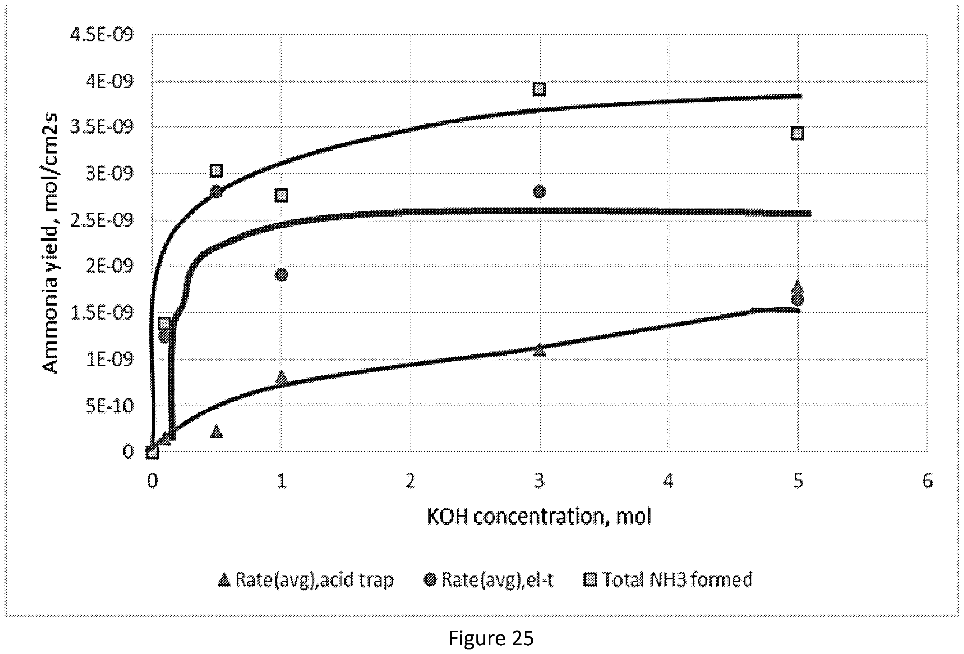

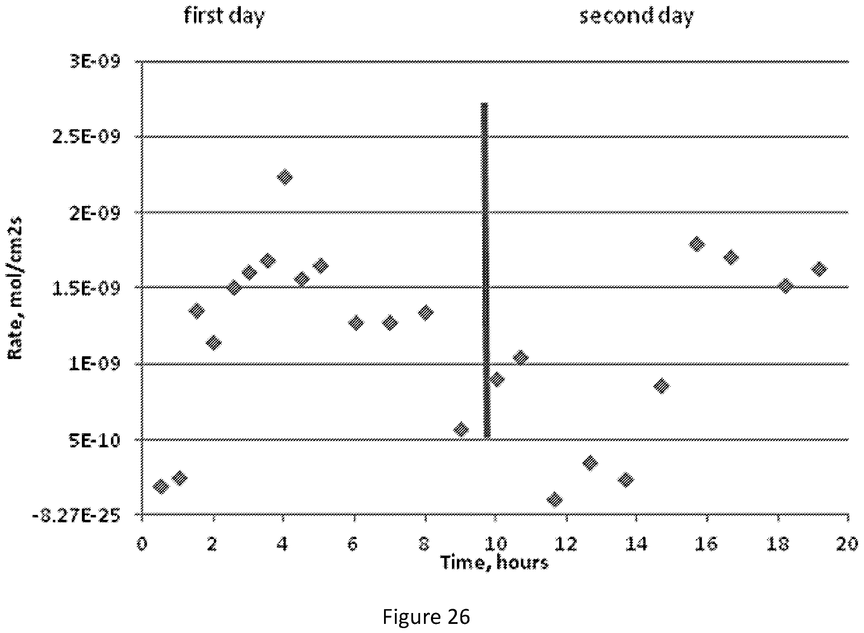

The rate of electrochemical ammonia formation at $Fe_2TiO_3/TiO_2/C$ catalyst at room temperature and 50 °C is shown in Figure 24. The effect of KOH concentration and stability of electrode are shown in Figure 25and 26 respectively.

The ammonia formation rate is higher at 50 °C than RT. As KOH electrolyte concentration increased, the rate of ammonia formation increased. This could be due to catalyst active sites available for nitrogen reduction reaction than hydrogen evolution reaction. More importantly, $Fe_2TiO_3/TiO_2/C$ catalyst showed sataisfactory stability as shown in Figure 26.

Although the invention has been described in conjunction with specific embodiments thereof, it is evident that many modifications and variations will be apparent to those skilled in the art. Accordingly, it is intended to embrace all such modifications and variations that fall within the scope of the appended claims.

**Claims**

1. A composition comprising a first metal component and a second metal component **characterized by** a molar ratio of said first metal component to said second metal component is in the range of 1:9 to 9:1, wherein:

   (i) at least one surface of said second metal component is coated with said first metal component;
   (ii) first metal component comprises $Fe_2O_3$ or $Fe_3O_4$ or $Fe_2O_3FeO$ and wherein said second metal component comprises $TiO_2$, and
   (iii) said composition is in the form of particles.

2. The composition of claim 1, wherein said particles have a size in the range of 1 nm to 50 $\mu$m, determined by STEM imaging.

3. The composition of any one of claims 1 and 2, further comprising a substrate, wherein said first metal component and said second metal component are deposited on at least one surface of said substrate, optionally wherein said substrate is selected from the group consisting of: carbon black, activated carbon, graphite, carbon nanotube, and any combination thereof, further optionally wherein said carbon black is selected from the group consisting of: carbon nanotube and graphene.

4. The composition of claim 3, wherein said substrate is present at a concentration of 5% to 50%, by total weight of said composition.

5. The composition of any one of claims 1 to 4, wherein said composition is a catalyst.

6. The composition of claim 5, wherein said catalyst is **characterized by** electrocatalytic activity towards nitrogen reduction.

7. An electrochemical cell **characterized by** having a cathode comprising the catalyst of claim 5.

8. The electrochemical cell of claim 7, comprising an alkali electrolyte, wherein the electrochemical cell is configured for electrochemical synthesis of ammonia.

9. The electrochemical cell of claim 7, further comprising:

an electrolysis cell container comprising an inlet and an outlet;
a distributor, wherein said distributor is in fluid communication with said cathode and said inlet; and
an anode, wherein:

(i) said anode and cathode are spaced apart from each other inside the container;
(ii) said anode is in electrical communication with said cathode;
(iii) the largest dimension of said anode and said cathode is defined by transverse cross-section dimensions of said electrolysis cell container; and
(iv) said cathode is at least 50 fold thicker than said anode.

10. The electrochemical cell of claim 9, wherein any one of: (i) said container is configured to allow a nitrogen gas to enter through said inlet and to contact said distributor; (ii) said distributor is configured to uniformly distribute said gas over a surface of said cathode; (iii) wherein said cathode, said anode or both, is at least partially porous; (iv) wherein said container is configured to allow a nitrogen gas to enter thereto and to contact said cathode; (v) said electrochemical cell is configured to synthesize ammonia at a rate of $1 \times 10^{-11}$ mol s$^{-1}$cm$^{-2}$ to $1 \times 10^{-7}$ mol s$^{-1}$cm$^{-2}$ at 1 atm N$_2$; and (ii) wherein remaining gas is directed via said outlet into a collecting chamber, optionally wherein said collecting chamber is an acid trap.

11. A process of synthesizing ammonia, the process **characterized by** a faradaic efficiency in the range of 1% to 30%, and comprising the steps of: (i) contacting a nitrogen gas with the cathode of the electrochemical cell of claim 10, and (ii) applying an electric potential to the anode and the cathode, thereby obtaining said ammonia, optionally wherein:
said synthesis is performed at a temperature of from 20 °C to 80 °C; or the rate of ammonia production is in the range of $1 \times 10^{-11}$ mol s$^{-1}$cm$^{-2}$ to $1 \times 10^{-7}$ mol s$^{-1}$cm$^{-2}$.

**Patentansprüche**

1. Zusammensetzung, die eine erste Metallkomponente und eine zweite Metallkomponente umfasst, die durch ein Molverhältnis der ersten Metallkomponente zur zweiten Metallkomponente im Bereich von 1:9 bis 9:1 gekennzeichnet ist, wobei:

(i) mindestens eine Oberfläche der zweiten Metallkomponente mit der ersten Metallkomponente beschichtet ist;
(ii) die erste Metallkomponente Fe$_2$O$_3$ oder Fe$_3$O$_4$ oder Fe$_2$O$_3$FeO umfasst und wobei die zweite Metallkomponente TiO$_2$ umfasst; und
(iii) die Zusammensetzung in Form von Partikeln vorliegt.

**2.** Zusammensetzung nach Anspruch 1, wobei die Partikel eine Größe im Bereich von 1 nm bis 50 $\mu$m aufweisen, bestimmt durch STEM-Bildgebung.

**3.** Zusammensetzung nach einem der Ansprüche 1 und 2, ferner umfassend ein Substrat, wobei die erste Metallkomponente und die zweite Metallkomponente auf mindestens einer Oberfläche des Substrats abgelagert sind, optional wobei das Substrat aus der Gruppe bestehend aus Kohlenstoffschwarz, Aktivkohlenstoff, Graphit, Kohlenstoffnanoröhre und einer beliebigen Kombination daraus ausgewählt ist, ferner optional wobei das Kohlenstoffschwarz aus der Gruppe bestehend aus Kohlenstoffnanoröhre und Graphen ausgewählt ist.

**4.** Zusammensetzung nach Anspruch 3, wobei das Substrat in einer Konzentration von 5 Gesamtgew.-% bis 50 Gesamtgew.-% der Zusammensetzung vorliegt.

**5.** Zusammensetzung nach einem der Ansprüche 1 bis 4, wobei die Zusammensetzung ein Katalysator ist.

**6.** Zusammensetzung nach Anspruch 5, wobei der Katalysator durch elektrokatalytische Aktivität zur Stickstoffreduzierung gekennzeichnet ist.

**7.** Elektrochemische Zelle, die **dadurch gekennzeichnet ist, dass** sie eine Kathode aufweist, die den Katalysator nach Anspruch 5 umfasst.

**8.** Elektrochemische Zelle nach Anspruch 7, die einen Alkalielektrolyten umfasst, wobei die elektrochemische Zelle zur elektrochemischen Synthese von Ammoniak ausgestaltet ist.

**9.** Elektrochemische Zelle nach Anspruch 7, ferner umfassend:

einen Elektrolysezellenbehälter, der einen Einlass und einen Auslass umfasst;
einen Verteiler, wobei der Verteiler in Fluidkommunikation mit der Kathode und dem Einlass ist; und
eine Anode, wobei:

(i) die Anode und Kathode in dem Behälter voneinander beabstandet sind;
(ii) die Anode in elektrischer Kommunikation mit der Kathode ist;
(iii) die größte Abmessung der Anode und der Kathode durch transversale Querschnittsabmessungen des Elektrolysezellenbehälters definiert ist; und
(iv) die Kathode mindestens 50-fach dicker als die Anode ist.

**10.** Elektrochemische Zelle nach Anspruch 9, wobei ein beliebiges:

(i) der Behälter dazu ausgestaltet ist, zu erlauben, dass ein Stickstoffgas durch den Einlass gelangt und den Verteiler berührt;
(ii) der Verteiler dazu ausgestaltet ist, das Gas einheitlich über eine Oberfläche der Kathode zu verteilen; (iii) wobei die Kathode, die Anode oder beide mindestens teilweise porös sind; (iv) wobei der Behälter dazu ausgestaltet ist, zu erlauben, dass ein Stickstoffgas dort hinein gelangt und die Kathode berührt; (v) die elektrochemische Zelle dazu ausgestaltet ist, Ammoniak mit einer Geschwindigkeit von $1 \times 10^{-11}$ mol s$^{-1}$cm$^{-2}$ bis $1 \times 10^{-7}$ mol s$^{-1}$cm$^{-2}$ bei 1 atm N$_2$ zu synthetisieren; und (ii) wobei restliches Gas über den Auslass in eine Auffangkammer geleitet wird, optional wobei die Auffangkammer eine Säurefalle ist.

**11.** Verfahren zum Synthetisieren von Ammoniak, wobei das Verfahren durch einen faradayschen Wirkungsgrad im Bereich von 1% bis 30% gekennzeichnet ist, und umfassend die Schritte des: (i) Kontaktierens eines Stickstoffgases mit der Kathode der elektrochemischen Zelle nach Anspruch 10, und (ii) Anlegens eines elektrischen Potenzials an die Anode und die Kathode, wodurch das Ammoniak erhalten wird, optional wobei:
die Synthese bei einer Temperatur von 20°C bis 80°C durchgeführt wird; oder die Ammoniakproduktionsgeschwindigkeit im Bereich von $1 \times 10^{-11}$ mol s$^{-1}$cm$^{-2}$ bis $1 \times 10^{-7}$ mol s$^{-1}$cm$^{-2}$ liegt.

**Revendications**

**1.** Composition comprenant un premier composant métallique et un second composant métallique **caractérisée par** un rapport molaire dudit premier composant métallique audit second composant métallique dans la plage de 1:9 à 9:1, dans laquelle :

(i) au moins une surface dudit second composant métallique est recouverte dudit premier composant métallique ;
(ii) le premier composant métallique comprend $Fe_2O_3$ ou $Fe_3O_4$ ou $Fe_2O_3FeO$ et dans laquelle ledit second composant métallique comprend $TiO_2$, et
(iii) ladite composition est sous la forme de particules.

2. Composition selon la revendication 1, dans laquelle lesdites particules ont une taille dans la plage de 1 nm à 50 $\mu$m, déterminée par imagerie STEM.

3. Composition selon l'une quelconque des revendications 1 et 2, comprenant en outre un substrat, dans laquelle ledit premier composant métallique et ledit second composant métallique sont déposés sur au moins une surface dudit substrat, dans laquelle ledit substrat est facultativement choisi dans le groupe constitué de : noir de carbone, charbon actif, graphite, nanotube de carbone, et toute combinaison de ceux-ci, en outre facultativement dans laquelle ledit noir de carbone est choisi dans le groupe constitué de : nanotube de carbone et graphène.

4. Composition selon la revendication 3, dans laquelle ledit substrat est présent à une concentration de 5 % à 50 %, en poids total de ladite composition.

5. Composition selon l'une quelconque des revendications 1 à 4, dans laquelle ladite composition est un catalyseur.

6. Composition selon la revendication 5, dans laquelle ledit catalyseur est **caractérisé par** une activité électrocatalytique en vue d'une réduction d'azote.

7. Cellule électrochimique **caractérisée en ce qu'**elle a une cathode comprenant le catalyseur selon la revendication 5.

8. Cellule électrochimique selon la revendication 7, comprenant un électrolyte alcalin, dans laquelle la cellule électrochimique est configurée pour une synthèse électrochimique d'ammoniac.

9. Cellule électrochimique selon la revendication 7, comprenant en outre :

un conteneur de cellule d'électrolyse comprenant une entrée et une sortie ;
un distributeur, ledit distributeur étant en communication fluidique avec ladite cathode et ladite entrée ; et
une anode, dans laquelle :

(i) lesdites anode et cathode sont espacées l'une de l'autre à l'intérieur du conteneur ;
(ii) ladite anode est en communication électrique avec ladite cathode ;
(iii) la dimension la plus grande de ladite anode et de ladite cathode est définie par des dimensions en coupe transversale dudit conteneur de cellule d'électrolyse ; et
(iv) ladite cathode est au moins 50 fois plus épaisse que ladite anode.

10. Cellule électrochimique selon la revendication 9, dans laquelle l'un quelconque parmi : (i) ledit conteneur est configuré pour permettre à un gaz d'azote d'entrer à travers ladite entrée et d'entrer en contact avec ledit distributeur ; (ii) ledit distributeur est configuré pour distribuer uniformément ledit gaz sur une surface de ladite cathode ; (iii) dans laquelle ladite cathode, ladite anode ou les deux, sont au moins partiellement poreuses ; (iv) dans laquelle ledit conteneur est configuré pour permettre à un gaz d'azote d'entrer dans celui-ci et d'entrer en contact avec ladite cathode ; (v) ladite cellule électrochimique est configurée pour synthétiser de l'ammoniac à un taux de $1 \times 10^{-11}$ mole s$^{-1}$cm$^{-2}$ à $1 \times 10^{-7}$ mole s$^{-1}$cm$^{-2}$ à 1 atm $N_2$ ; et (ii) dans laquelle le gaz restant est dirigé via ladite sortie dans une chambre de collecte, facultativement dans laquelle ladite chambre de collecte est un piège à acide.

11. Procédé de synthèse d'ammoniac, le procédé étant **caractérisé par** une efficacité faradique dans la plage de 1 % à 30 %, et comprenant les étapes consistant à :

(i) mettre en contact un gaz d'azote avec la cathode de la cellule électrochimique selon la revendication 10, et
(ii) appliquer un potentiel électrique à l'anode et à la cathode, en obtenant ainsi ledit ammoniac, facultativement dans lequel :
ladite synthèse est réalisée à une température de 20 °C à 80 °C ; ou le taux de production d'ammoniac est dans la plage de $1 \times 10^{-11}$ mole s$^{-1}$cm$^{-2}$ à $1 \times 10^{-7}$ mole s$^{-1}$cm$^{-2}$.

Figure 1A

Figure 1B

EP 3 774 027 B1

Figure 1C

Figure 1D

Figure 2A

Figure 2B

EP 3 774 027 B1

Figure 2C

Figure 3A

Figure 3B

EP 3 774 027 B1

Figure 3C

Figure 3D

EP 3 774 027 B1

Figure 3E

Figure 4A

Figure 4B

Figure 5A

Figure 5B

Figure 5C

Figure 5D

Figure 6

Figure 7B

Figure 7A

Figure 7D

Figure 7C

Figure 8A

Figure 8B

Figure 9B

Figure 9A

Figure 9C

Figure 9D

EP 3 774 027 B1

Figure 10A

Figure 10B

EP 3 774 027 B1

Figure 11A

Figure 11B

EP 3 774 027 B1

Figure 11C

Figure 12A

Figure 12B

EP 3 774 027 B1

Figure 12C

Figure 13A

Figure 13B

Figure 14A

Figure 14B

EP 3 774 027 B1

Figure 14C

Figure 14D

EP 3 774 027 B1

Figure 15

# Indophenol method

Figure 16A

Figure 16B

Figure 16C

Figure 17

Figure 18A

Figure 18B

EP 3 774 027 B1

Figure 19A

Figure 19B

EP 3 774 027 B1

Figure 20A

Figure 20B

EP 3 774 027 B1

Figure 21A

Figure 21B

Figure 22

Figure 23

Figure 24

Figure 25

Figure 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62651310
- US 62731992
- WO 2011089522 A2
- WO 0154216 A2
- US 2006134505 A1
- US 2012308467 A1

### Non-patent literature cited in the description

- **KORDALI et al.** *Chem. Commun.,* 2000, 1673
- **BAO et al.** *Adv. Mater.,* 2017, vol. 29, 1
- **LI et al.** *Nat. Chem.,* 2012, vol. 4, 934
- **KITANO et al.** *Nat. Chem.,* 2012, vol. 4, 934
- **BIELAWA et al.** *Angew. Chemie - Int. Ed.,* 2001, vol. 40, 1061